(19) Europäisches Patentamt
European Patent Office
Office européen des brevets

(11) **EP 3 948 105 B1**

(12) **EUROPÄISCHE PATENTSCHRIFT**

(45) Veröffentlichungstag und Bekanntmachung des Hinweises auf die Patenterteilung:
**16.08.2023  Patentblatt 2023/33**

(21) Anmeldenummer: **19759338.7**

(22) Anmeldetag: **23.08.2019**

(51) Internationale Patentklassifikation (IPC):
**F25B 1/00** (2006.01)   **F25B 30/02** (2006.01)
**C09K 5/04** (2006.01)

(52) Gemeinsame Patentklassifikation (CPC):
**C09K 5/041; F25B 1/04; F25B 31/006; F25B 49/005;** F25B 47/006; F25B 2400/0409

(86) Internationale Anmeldenummer:
**PCT/EP2019/072541**

(87) Internationale Veröffentlichungsnummer:
**WO 2020/200491 (08.10.2020 Gazette 2020/41)**

(54) **THERMISCHE ARBEITSMASCHINE MIT EINEM KÄLTEMITTEL AUF WASSERBASIS**

THERMAL WORKING MACHINE HAVING A WATER-BASED REFRIGERANT

MACHINE DE TRAVAIL THERMIQUE POURVUE D'UN AGENT RÉFRIGÉRANT À BASE D'EAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.03.2019  DE 102019002297**

(43) Veröffentlichungstag der Anmeldung:
**09.02.2022  Patentblatt 2022/06**

(73) Patentinhaber: **Combipart GmbH**
**70736 Fellbach (DE)**

(72) Erfinder:
• **STEFFENS, Ralf**
**73728 Esslingen (DE)**
• **KLEIN, Steffen**
**73614 Schorndorf (DE)**

(74) Vertreter: **Heidinger, Andreas**
**Haldenwiesli 17**
**8207 Schaffhausen (CH)**

(56) Entgegenhaltungen:
**WO-A1-2018/134200    WO-A2-2006/087549 US-A1- 2015 260 435**

**Beschreibung**

Die Erfindung betrifft eine thermische Arbeitsmaschine nach dem Oberbegriff des Anspruchs 1.

Eine thermische Arbeitsmaschine, in welcher mechanische Energie in thermische Energie umgewandelt wird, also beispielsweise eine Kältemaschine oder eine Wärmepumpe, benötigt ein Kältemittel, das während des Betriebs Temperatur und Zustandsänderungen erfährt. Wegen ihren guten thermodynamischen Eigenschaften wurden bisher häufig Fluorkohlenwasserstoffe, wie beispielsweise das als Kältemittel R134a bezeichnete Tetrafluorethan, verwendet. Hauptsächlich wegen ihrer Wirkung als so genannte Treibhausgase müssen für die Zukunft Kältemittel mit einem geringen Treibhauspotential gefunden werden. Der Fokus liegt dabei vor allem auf natürlichen Kältemitteln, zu denen Ammoniak, Kohlenstoffdioxid, Luft, Propan, Propen und Wasser zählen. Vorteile von natürlichen Kältemitteln sind insbesondere ihre umweltfreundlichen Eigenschaften. Sie leisten keinen Beitrag zum Ozonschichtabbau und verursachen keinen nennenswerten direkten Treibhauseffekt.

In der DE 10 2004 001927 A1 wird eine thermische Arbeitsmaschine in Form einer Wärmepumpe beschrieben, bei der Wasser als Kältemittel Verwendung findet. Wasser wird als Kältemittel R718 bezeichnet. Es hat bekanntlich die Eigenschaft, bei 0° C zu gefrieren, also zu Eis zu werden. Eis würde die thermische Arbeitsmaschine behindern und blockieren. Eine thermische Arbeitsmaschine mit Wasser als Kältemittel kann damit nur bei Temperaturen über dem Gefrierpunkt betrieben werden.

Die beschriebene Einschränkung des Einsatzbereichs auf Temperaturen grösser 0°C schränkt die Einsatzmöglichkeiten einer mit Wasser als Kältemittel thermischen Arbeitsmaschine sehr stark ein. Beispielsweise könnte eine Wärmepumpe zum Heizen eines Hauses zumindest in Mitteleuropa nicht mit Wasser als Kältemittel betrieben werden, da in Mitteleuropa mit Temperaturen unter dem Gefrierpunkt zu rechnen ist. Es wäre auch selbst bei Umgebungstemperaturen über 0°C nicht möglich, einen Raum oder ein Arbeitsmedium auf eine Temperatur unter 0° C zu kühlen. Das Minimum der geringsten Umgebungstemperatur und der geringsten Raumoder Arbeitsmedium-Temperatur kann als untere Grenze des Einsatzbereichs des Kältemittels bezeichnet werden. Das Maximum der höchsten Umgebungstemperatur und der höchsten Raum- oder Arbeitsmedium-Temperatur kann als obere Grenze des Einsatzbereichs des Kältemittels bezeichnet werden.

Die WO 2006/087549 A2 und US 2015/0260435 A1 beschreiben thermische Arbeitsmaschinen mit einem Kältemittel auf Wasserbasis, welches einen Kältemittelanteil mit einer Hydroxygruppe aufweist.

Demgegenüber ist es die Aufgabe der Erfindung, eine thermische Arbeitsmaschine vorzuschlagen, welche möglichst geringe negative Auswirkungen auf die Umwelt und einen möglichst großen Einsatzbereich haben. Diese Aufgabe wird mit einer thermischen Arbeitsmaschine gemäß Anspruch 1 gelöst.

Das in der erfindungsgemäßen thermischen Arbeitsmaschine mit einem Verdampfer, einem Verflüssiger, einem Verdichter und einem Drosselorgan enthaltene Kältemittel basiert auf Wasser und weist einen Kältemittelanteil mit einer Hydroxygruppe, also einer OH-Gruppe bzw. Wasserstoff-Sauerstoff-Gruppe auf. Damit kann der Gefrierpunkt, also die Temperatur, bei der das Kältemittel vom flüssigen in den festen Zustand übergeht, in einen Temperaturbereich unter den Gefrierpunkt von reinem Wasser, also 0°C verschoben werden. Somit kann auch die thermische Arbeitsmaschine vorteilhafterweise auch bei Temperaturen unter 0°C eingesetzt werden und auch Räume oder Arbeitsmedien auf eine Temperatur unter 0°C kühlen. Ein Einsatzbereich von Wasser als Kältemittel, also als Kältemittel R718 kann damit vorteilhafterweise erweitert werden.

Die bestimmungsgemäße Verwendung des Kältemittels ist damit eine Verwendung einer Mischung aus Wasser und einem Kältemittelanteil mit einer Hydroxygruppe als Kältemittel für eine thermische Arbeitsmaschine mit einem Verdampfer, einem Verflüssiger, einem Verdichter und einem Drosselorgan.

Unter einem Kältemittel auf Wasserbasis wird ein Kältemittel verstanden, das zumindest in einem nicht vernachlässigbaren Umfang Wasser enthält. Der Wasseranteil liegt insbesondere über 50 %. Es ist aber auch für besondere Anwendungen auch möglich, dass der Wasseranteil kleiner als 50 %, also beispielsweise nur 10 % oder nur 1 % beträgt. Die Prozentangaben sind wie alle anderen folgenden Prozentangaben bezüglich der Masse des Kältemittels angegeben, also Massenprozente und keine Volumenprozente.

Unter einer thermischen Arbeitsmaschine wird hier eine Maschine verstanden, welche mechanische Energie in thermische Energie umwandelt. Die thermische Arbeitsmaschine ist insbesondere als eine Kältemaschine, eine Wärmepumpe oder als eine Kombination aus Kältemaschine, eine Wärmepumpe ausgeführt.

Das Kältemittel kann neben dem genannten Kältemittelanteil mit einer Hydroxygruppe weitere Anteile aufweisen.

Der Umfang des Kältemittelanteils kann an eine geplante Anwendung des Kältemittels angepasst, also applikationsspezifisch gewählt werden. Es gilt dabei allgemein die Regel, dass je tiefer die untere Grenze des geplanten Einsatzbereichs der thermischen Arbeitsmaschine ist, desto grösser ist der Umfang des Kältemittelanteils mit einer Hydroxygruppe.

Der genannte Kältemittelanteil mit einer Hydroxygruppe besteht insbesondere aus einem Alkohol, insbesondere einem einwertigen Alkohol, speziell um Ethanol mit der Summenformel $C_2H_6O$ bzw. als Molekülformel $C_2H_5OH$ oder auch Propan-1-ol mit der Summenformel $C_3H_8O$ bzw. als Molekülformel $C_3H_7OH$. Es sind

auch Mischungen unterschiedlicher Alkohole möglich. Alkohole, insbesondere einwertige Alkohole, also Alkohole mit nur einer OH-Gruppe, und speziell Ethanol und Propan-1-ol haben einige Eigenschaften, die sich beim Einsatz als Kältemittelanteil positiv auswirken. Sie weisen einen geringen Gefrierpunkt (Ethanol von etwa -114,5°C, Propan-1-ol von -126°C) auf, sind gut in Wasser löslich, sind nicht oder nur gering gesundheitsschädlich und sind unbedenklich oder nur gering bedenklich für die Umwelt.

Der genannte Kältemittelanteil beträgt insbesondere mindestens 10 %, insbesondere mindestens 20 %, speziell mindestens 30 % des gesamten Kältemittels. Damit kann eine besonders vorteilhafte Erweiterung des Einsatzbereichs des Kältemittels erreicht werden. Beispielsweise kann bei Verwendung von Ethanol die untere Grenze des Einsatzbereichs mit einem Anteil von 10 % auf ca. -5°C, mit einem Anteil von 20 % auf ca. -10°C und mit einem Anteil von 30 % auf ca. -19°C verschoben werden.

Mit einer weiteren Erhöhung des Kältemittelanteils auf beispielsweise 40 oder 50 % lässt sich die untere Grenze des Einsatzbereichs noch weiter zu tieferen Temperaturen verschieben. Beispielsweise mit Ethanol bei einem Anteil von 40 % auf ca. -30°C und einem Anteil von 50 % auf ca. -37°C.

Der genannte Kältemittelanteil mit einer Hydroxygruppe am gesamten Kältemittel ist insbesondere höchstens so hoch, dass das Kältemittel nicht entzündlich ist. Damit besteht keine Gefahr, dass das Kältemittel in Brand geraten kann, was einen besonders sicheren Umgang mit dem Kältemittel und einen besonders sicheren Einsatz des Kältemittels ermöglicht. Außerdem ist die Handhabung nicht-brennbarer Stoffe gegenüber brennbaren Stoffen deutlich einfacher und weniger aufwändig und damit kostengünstiger.

Das Kältemittel ist insbesondere bei Bedingungen, die während des Betriebs der thermischen Arbeitsmaschine herrschen, also bei so genannten Betriebsbedingungen nicht entzündlich. Damit besteht keine Gefahr, dass sich das Kältemittel während des Betriebs in der thermischen Arbeitsmaschine entzündet. Die Bedingungen betreffen insbesondere den herrschenden Druck und die Temperatur.

Das Kältemittel ist alternativ oder zusätzlich bei Normbedingungen nicht entzündlich. Damit besteht keine Gefahr, dass sich das Kältemittel während des Transports, der Lagerung oder dem Einbringen in die thermische Kältemaschine entzündet.

Der maximale Anteil des Kältemittelanteils mit einer Hydroxygruppe für die Einhaltung der genannten Bedingung hängt vom verwendeten Kältemittelanteil, also beispielsweise der Art des Alkohols, ab und kann beispielsweise durch einfache Versuche bestimmt werden. Beim Einsatz von Ethanol liegt der maximale Anteil beispielsweise zwischen 40 und 45 %. Unter Normbedingungen werden hier die chemischen Normbedingungen, also eine Temperatur von 0°C und ein Druck von 1013,25 mbar verstanden.

Es ist aber auch möglich, dass der Kältemittelanteil mit einer Hydroxygruppe am gesamten Kältemittel so hoch ist, dass das Kältemittel bei Normbedingungen entzündlich ist. Die Entzündlichkeit kann beispielsweise dann in Kauf genommen werden, wenn die untere Grenze des Einsatzbereichs bei sehr tiefen Temperaturen liegt und alternative Kältemittel weitere oder schwerwiegendere Nachteile aufweisen, beispielsweise zusätzlich explosiv sind. Beispielsweise kann für eine untere Grenze des Einsatzbereichs von -110°C ein Ethanolanteil von 90 % verwendet werden.

Die oben genannte Aufgabe wird von einer thermischen Arbeitsmaschine mit einem Verdampfer, einem Verflüssiger, einem Verdichter, einem Drosselorgan und einem Kältemittelkreislauf mit einem oben beschriebenen Kältemittel gelöst.

Erfindungsgemäß weist die thermische Arbeitsmaschine eine Kältemittel-Einstell-Vorrichtung auf, mittels welcher der Kältemittelanteil mit der Hydroxygruppe des Kältemittels während des Betriebs der thermischen Arbeitsmaschine verändert werden kann. Mit der Veränderung des Kältemittelanteils mit der Hydroxygruppe, also dem Anteil des Kältemittels mit der Hydroxygruppe am gesamten Kältemittel kann die untere Grenze des Einsatzbereichs während des Betriebs verändert werden. Damit kann während des Betriebs auf Änderungen von Umgebungs- oder Randbedingungen der thermischen Arbeitsmaschine reagiert werden, ohne dass der Betrieb der thermischen Arbeitsmaschine unterbrochen werden muss. Die Kältemittel-Einstell-Vorrichtung ist insbesondere so ausgeführt, dass sie dem gesamten Kältemittel reines Wasser, reinen Kältemittelanteil mit einer Hydroxygruppe oder ein Gemisch daraus zugeführt werden kann. Die Kältemittel-Einstell-Vorrichtung kann eine Messvorrichtung, beispielsweise ein Refraktometer aufweisen, mittels welchem der Kältemittelanteil mit einer Hydroxygruppe bestimmt werden kann. Damit ist es möglich, einen gewünschten Kältemittelanteil mit einer Hydroxygruppe einzustellen bzw. einzuregeln.

In Ausgestaltung der Erfindung sind alle elektrischen Bauteile der thermischen Arbeitsmaschine explosionsgeschützt ausgeführt. Dies ermöglicht einen besonders sicheren Betrieb der thermischen Arbeitsmaschine. Unter den elektrischen Bauteilen der thermischen Arbeitsmaschine werden hier beispielsweise der oder die Motoren, insbesondere Elektromotoren zum Antrieb des Verdichters, notwendige Verkabelungen, Steuergeräte, Sensoren, etc. verstanden. Unter einer explosionsgeschützten Ausführung wird insbesondere eine ATEX-Produktrichtlinie 2014/34/EU konforme Ausführung verstanden. Dabei werden beispielsweise Motorwicklungen von Elektromotoren mit Kunststoff vergossen und Kabeldurchführungen gasdicht ausgeführt, beispielsweise ebenfalls vergossen.

In Ausgestaltung der Erfindung ist der Verdichter als eine 2-Wellen-Rotations-Verdrängermaschine mit einem um eine erste Trägerwelle rotierbaren ersten Spindelrotor und einem um eine zweite Trägerwelle rotierbaren zweiten Spindelrotor ausgeführt, welche mittels mit dem Kältemittel betriebenen Gleitlagern gelagert sind. Eine derartige 2-Wellen-Rotations-Verdrängermaschine ist beispielsweise in der nicht vorveröffentlichte deutschen Patentanmeldung mit der Anmeldenummer DE 10 2018 001 519.0 beschrieben.

Bei Verwendung eines Kältemittels mit einem Kältemittelanteil mit einer Hydroxygruppe sind vakuumspezifisch sehr hohe Druckverhältnisse erforderlich, indem beispielsweise von 2 mbar auf 200 mbar verdichtet werden muss. Derartige Kompressionsverhältnisse sind aktuell technisch sinnvoll nur mit mehrstufigen Rotationsvakuumverdrängermaschinen realisierbar. Der so genannte "Spindelverdichter" ist als 2-Wellen-Rotations-Verdrängermaschine ausgeführt, welcher wie ein mehrstufiger Schraubenverdichter funktioniert. Der Spindelverdichter wird dabei insbesondere als so genannter "Trockenläufer" betrieben, wobei im Arbeitsraum vorzugsweise ohne Betriebsfluid gearbeitet wird, indem die Berührungsfreiheit der beiden Spindeln üblicherweise per elektronischer Synchronisation gewährleistet wird. Dabei verfügt jeder Spindelrotor über einen eigenen Antrieb (Motor), der elektronisch derart genau betrieben wird, dass sich die beiden Spindelrotoren im Betrieb nicht berühren.

Die Lagerung der Spindelrotoren mit Gleitlagern, die mit Kältemitteln betrieben werden, ermöglicht es vorteilhaft, auf Schmiermittel, insbesondere Fette oder Öle, bei der Lagerung zu verzichten. Damit besteht keine Gefahr, dass das Schmiermittel aus einem Lager ausgewaschen oder verdünnt wird, was beispielsweise passieren kann, wenn Kältemittel im Lagerbereich kondensiert. Ein derartiges Auswaschen oder Verdünnen von Lager-Schmiermittel kann zu Lagerschäden und damit zum Ausfall des Verdichters und damit der der gesamten thermischen Arbeitsmaschine führen. Der Einsatz der genannten Gleitlager führt damit zu einem besonders zuverlässigen Betrieb des Verdichters und damit der gesamten thermischen Arbeitsmaschine.

Beispielsweise werden bei der Lagerung der Spindelrotoren mit Gleitlagern Radialkräfte an jedem Spindelrotorende über Laufbuchsen drehend auf einer feststehenden und durchgehenden Trägerwelle mit einer geringen Abstützlänge abgestützt und Axialkräfte jedes Spindelrotors werden über Axial-Gleitlager von einem gestellfesten Abstützring ebenfalls von dieser Trägerwelle aufgenommen. Jede Trägerwelle ist über Achsträger mit Kragarmen am Verdichtergehäuse befestigt. Eine Drucktrennung zwischen dem Druck $p_1$ am Verdichter-Einlass und dem Druck $p_2$ am Verdichter-Auslass an der durchgehenden Trägerwelle erfolgt vorzugsweise am Axial-Kältemittelgleit-Widerlager derart, dass am größeren Radius der höhere Druck $p_2$ und am kleineren Radius der geringere Druck $p_1$ anliegt.

Beispielsweise wird zur elektronischen Motorpaar-Spindelrotor-Synchronisation der Antrieb für jeden Spindelrotor als ein Außenläufer-Motor als Antriebsmaschine ausgeführt, vorzugsweise als Synchronmotor. Sein Motorstator ist mit seinen Wicklungen ebenfalls auf der genannten Trägerwelle drehtest montiert, wobei sein Motorrotor drehfest den Spindelrotor per Drehmoment antreibt, wobei die Motorverlustwärme über eine Achskältemittelkühlung maßgeblich abgeführt wird.

Der Außenläufer-Motor steht zur Verbesserung der Wärmebilanz im Betrieb insbesondere unter dem Druck $p_1$ am Verdichter-Einlass und seine Motorkabel werden insbesondere in einer Bohrung der Trägerwelle zur Einlass-Seite des Verdichters herausgeführt.

Jeder Spindelrotor wird insbesondere mit einem Trägerrohr derart ausgeführt, dass die erforderliche Biegesteifigkeit hinsichtlich der gewünscht hohen biegekritischen Drehzahl erzielt wird, wobei auf jedem Trägerrohr ein Fördergewinderotor mit einem Gasförder-Außengewinde drehtest sitzt, der applikationsspezifisch (also für besondere Temperatur-Anforderungen) mit zylindrischer Rotorinnen-Verdampferkühlung unter dem Druck $p_1$ am Verdichter-Einlass mit einer Kältemittelversorgung mittels eines Zuführrohrs und Kältemitteldampf-Austritt auf der Einlass-Seite des Verdichters ausgeführt wird.

Das Außen-Fördergewinde jedes Spindelrotors wird derart ausgeführt, dass der Winkel am Fußkreis längs der Rotorachse in einem Bereich zwischen 0° und vorzugsweise unter 8° liegt.

Je Spindelrotor wird die Trägerwelle an jedem Ende über Achsträger drehfest gehalten, wobei vorzugsweise über Wellenmuttern und/oder Schälscheiben die axiale Positionierung insbesondere zur gezielten Spieleinstellung zwischen Spindelrotorkopf und Verdichtergehäuse-Arbeitsraumbohrung über die nichtzylindrische Spindelrotoraußenform erfolgt.

Jeder Spindelrotor wird insbesondere als fertig montierte und komplett gewuchtete Rotationseinheit ausgeführt, wobei so genannte Notfall-Synchronisierungs-Zahnräder auf der Auslass-Seite des Verdichters positioniert werden.

In Ausgestaltung der Erfindung wird der erste Spindelrotor von einer ersten Antriebsmaschine und der zweite Spindelrotor von einer zweiten Antriebsmaschine angetrieben und zur Kühlung wenigstens einer der Antriebsmaschinen, insbesondere beider Antriebsmaschinen wird das genannte Kältemittel eingesetzt. Damit wird eine besonders effektive Kühlung der Antriebsmaschinen möglich, ohne dass ein spezielles Kühlmittel verwendet werden müsste. Das Kältemittel kann dabei auch zumindest teilweise verdampfen, was zu einer besonders effektiven Abfuhr von Verlustwärme der Antriebsmaschine führt.

In Ausgestaltung der Erfindung weist der Verdichter wenigstens eine, insbesondere mehrere, speziell vier Staurohrpumpen auf, mittels welcher dem Verdichter zugeführtes Kältemittel aus dem Verdichter abgeführt wird. Damit kann Kältemittel einfach und effektiv aus dem Verdichter abgeführt werden. Die Staurohrpumpe bzw. die Staurohrpumpen können zusätzlich eine Kältemittel-Pumpe zur Erzeugung von unter Druck stehendem Kältemittel entlasten. Das unter Druck stehende Kältemittel wird den Gleitlagern zugeführt, um den notwendigen hydrostatischen Druck im Gleitlager aufrecht zu erhalten. Die Kältemittel-Pumpe wird insbesondere über einen Sammelbehälter gespeist, der geodätisch oberhalb der Kältemittel-Pumpe angeordnet ist. Die Staudruckpumpen fördern das vom Verdichter abgeführte Kältemittel insbesondere in den Sammelbehälter. Der Sammelbehälter ist insbesondere als ein geschlossener Behälter ausgeführt, in dem ein Druck aufgebaut werden kann.

Die Kältemittel-Pumpe wird hinsichtlich Druck und Volumenstrom sowie temperaturmäßig über den Wärmetauscher derart gezielt reguliert, dass die Lagerverluste minimiert werden.

Eine Staurohrpumpe verfügt über ein stationär angeordnetes Pitot-Rohr oder auch Staurohr, das in eine mit hoher Geschwindigkeit rotierende Flüssigkeit eintaucht (Pitot-Staurohr-Druckprinzip). Beim Eintritt der Flüssigkeit in das stationäre Pitot-Rohr wird die Geschwindigkeitsenergie in Druck umgewandelt.

Die Staurohrpumpe bzw. Staurohrpumpen werden insbesondere über jeweils eine um die entsprechende Trägerwelle herum verlaufende Staurinne gespeist, welche so ausgeführt und angeordnet ist, dass sich im Verdichter befindliches Kältemittel im Betrieb des Verdichters in der Staurinne sammelt. Damit sind keine weiteren Maßnahmen notwendig, um das Kältemittel in die Staurinne zu fördern und außerdem kann das Kältemittel besonders effektiv abgeführt werden und die Staurohrpumpe bzw. Staurohrpumpen können einen besonders hohen Druck aufbauen, was zu einer besonders guten Unterstützung der genannten Kältemittel-Pumpe führt.

Das zu Kühlung eingesetzte Kältemittel kann sich innerhalb eines vorgegebenen Bereichs innerhalb des Verdichters befinden. Die Staurinne ist dazu insbesondere bezüglich der entsprechenden Trägerwelle radial ganz außen innerhalb des genannten vorgegebenen Bereichs angeordnet, so dass sich das in Rotation versetzte Kältemittel, ohne dass weitere Maßnahmen notwendig wären, in der Kühlrinne sammelt.

Beispielsweise wird bei jedem Staurohr über dessen gekröpftes Rohrende durch Drehung des Staurohrs bei der Montage mit einem Spaltabstand zum Boden der Staurinne eine Eintauchtiefe in den durch die Fliehkräfte erzeugten Kältemittelring in der Staurinne derart gezielt eingestellt, dass über Anzahl und Positionierung der Staurohrpumpen deren geförderte Kältemittelmenge stets im Gleichgewicht zu den Kältemittelzuführmengen je Spindelrotorseite steht, wobei die Staurinne mit dem austretenden Kältemittel der Kältemittelgleitlager gefüllt ist und dieses Kältemittel durch die Fliehkräfte einen Kältemittelring in der Staurinne bildet, der an der Oberfläche einen Staurinnenkältemittel-Radius aufweist.

In Ausgestaltung der Erfindung ist der Verdichter als eine 2-Wellen-Rotations-Verdrängermaschine mit einem um eine erste Trägerwelle rotierbaren ersten Spindelrotor und einem um eine zweite Trägerwelle rotierbaren zweiten Spindelrotor ausgeführt, welche mittels Wälzlagern gelagert sind, wobei die Wälzlager durch Zuführung von Schutzgas vor einem Kontakt mit dem Kältemittel geschützt sind. Damit können vorteilhafterweise technisch ausgereifte und kostengünstige Wälzlager eingesetzt werden, ohne dass die Gefahr von Auswaschen oder Verdünnen von Schmiermitteln der Wälzlager in Form von Fett oder Öl besteht. Als Schutzgas kann beispielsweise Stickstoff eingesetzt werden.

Das Schutzgas wird in an die Wälzlager angrenzenden Räume zugeführt, welche als so genannte Seitenräume bezeichnet werden können.

In Ausgestaltung der Erfindung weist der Verdichter einen neutralen Raum auf, aus dem zugeführtes Schutzgas abgeführt wird, wobei dem neutralen Raum verdampftes Kältemittel zugeführt wird, so dass aus dem neutralen Raum ein Gemisch aus Schutzgas und verdampftem Kältemittel abgeführt bzw. abgesaugt wird. Die Zuführung von verdampftem Kältemittel führt zu einer Druckerhöhung des Schutzgas-Kältemitteldampf-Gemischs, was zu einem geringen Verbrauch an Schutzgas führt.

In Ausgestaltung der Erfindung weist der Verdichter einen Sperrdampfraum auf, dem Kältemittel zugeführt und welches dort verdampft wird, und welcher mit dem neutralen Raum verbunden ist. Im Sperrdampfraum wird beispielsweise eine mit Kältemittel benetzte Bürstendichtung eingesetzt, welche insbesondere mit warmem kondensierten Kältemittel benetzt wird. Durch Reibung der Borsten an der rotierenden Trägerwelle wird die für die Verdampfung notwendige Wärmeenergie erzeugt. Damit kann sehr einfach verdampftes Kältemittel für die Zuführung in den genannten neutralen Raum erzeugt werden.

In Ausgestaltung der Erfindung wird dem neutralen Raum Schutzgas über einen seitenraumseitigen Strömungswiderstand und/oder verdampftes Kältemittel über einen arbeitsraumseitigen Strömungswiderstand zugeführt. Damit kann vorteilhaft der Verbrauch an Schutzgas und/oder verdampften Kältemittel reduziert werden. Der Strömungswiderstand kann auch als ein Leitwertebremssystem bezeichnet werden. Er kann beispielsweise als ein enger Spalt vorzugsweise mit Strömungsunterbrechungswiderständen wie die Hintereinanderschaltung mehrerer, möglichst scharfkantiger Nuten ausgeführt sein.

Die Drücke in den Seitenräumen $p_S$ und im neutralen Raum $p_N$ werden dabei gegenüber dem Druck im Verdichterarbeitsraum $p_A$ so eingestellt, dass folgende Druckbedingung $p_S > p_A > p_N$ gilt. Die Einhaltung der Druckbedingung stellt sicher, dass kein Kältemittel in einen Seitenraum und damit in Kontakt mit einem Wälzlager kommen kann.

In Ausgestaltung der Erfindung weist die thermische Arbeitsmaschine eine Recycling-Einrichtung auf, der das aus dem neutralen Raum abgeführte Gemisch aus Schutzgas und verdampftem Kältemittel zugeführt wird und welche das genannte Gemisch in Schutzgas und Kältemittel auftrennt. Damit kann das abgeführte Gemisch wiederverwendet werden, was zu einem kostengünstigen Betrieb der thermischen Arbeitsmaschine führt. Das genannte Gemisch wird in der Recycling-Einrichtung beispielsweise durch einfaches Auskondensieren recycelt, indem die jeweiligen Bestandteile dank deutlich unterschiedlicher Verflüssigungstemperaturen gut trennbar sind. Die gewünschten Komponenten kondensieren entsprechend den Partialdrücken und können abgeschieden werden. Anschließend können die genannten Bestandteile vorzugsweise weiterverwendet werden, also insbesondere das anfallende Kältemittel wieder in den Kältemittelkreislauf zurückgeführt werden.

Weitere Ausgestaltungen der Erfindung gehen aus der Beschreibung und der Zeichnung hervor. Ausführungsbeispiele der Erfindung sind in der Zeichnung vereinfacht dargestellt und in der nachfolgenden Beschreibung näher erläutert. Dabei zeigen

Fig. 1     einen Längsschnitt durch einen Spindelrotor einer 2-Wellen-Rotations-Verdrängermaschine mit einer Gleitlagerung,

Fig. 2     einen Längsschnitt durch ein Verdrängerverdichter-Gesamtsystem bei stehender Ausführung und Gleitlagerung,

Fig. 3     eine vergrößerte Darstellung des Einlassbereichs der 2-Wellen-Rotations-Verdrängermaschine aus Fig. 1,

Fig. 4     eine vergrößerte Darstellung des Auslassbereichs der 2-Wellen-Rotations-Verdrängermaschine aus Fig. 1,

Fig. 5     einen Ausschnitt eines Spindelrotors einer 2-Wellen-Rotations-Verdrängermaschine mit einer Wälzlagerung im Längsschnitt,

Fig. 6     einen Ausschnitt eines Spindelrotors einer alternativen 2-Wellen-Rotations-Verdrängermaschine mit einer Wälzlagerung im Längsschnitt,

Fig. 7     eine schematische Darstellung einer thermischen Arbeitsmaschine mit einer 2-Wellen-Rotations-Verdrängermaschine mit einer Gleitlagerung und

Fig. 8     eine schematische Darstellung einer thermischen Arbeitsmaschine mit einer 2-Wellen-Rotations-Verdrängermaschine mit einer Wälzlagerung.

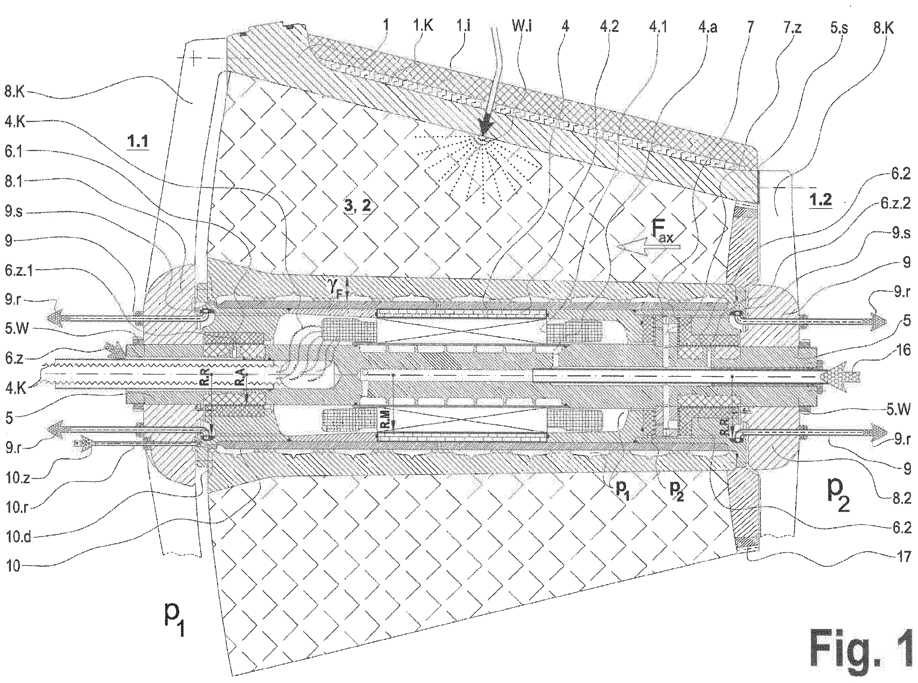

Fig. 1 zeigt beispielhaft eine Längsschnitt-Darstellung durch einen Spindelrotor 3, 2 und gilt bei den erfindungsgemäßen Merkmalen sowohl für den 3z-Spindelrotor 3 als auch für den 2z-Spindelrotor 2, weshalb am Spindelrotor die Bezugszeichen-Benennung 3, 2 gewählt wurde. Angegeben ist die Axialkraft $F_{ax}$, die im Betrieb bei jedem Spindelrotor durch die Druckdifferenz $\Delta p$ des Verdichters als $\Delta p = p_2 - p_1$ entsteht und vom Axial-Kältemittelgleitlager 7 aufgefangen wird. Das sogenannte "Lagerspiel" als Spalthöhe im Gleitlagerspalt 6.s liegt im Bereich weniger $\mu$m, beispielsweise bei einem Gleit-

lagerspalt-Radius von R.A = 20 mm im Bereich von 15 bis 35 $\mu$m. Als Material für die Gleitlagerbuchse 6.b wird vorzugsweise Keramik gewählt und die Gegenlauffläche 6.g auf der feststehenden Trägerwelle wird derart gewählt, dass Reibung und Verschleiß minimal sind.

In der gezeigten Darstellung fließt der auslassseitige Druckkältemittelzufluss 16 zunächst zur Motorachskältemittelkühlung 4.a und danach über die Druckkältemittelzuführungen 7z und 6z zum Axial- 7 sowie zum Radialkältemittelgleitlager 6, wobei sich über Anzahl und Querschnitt dieser Zuführungen die für jedes Lager notwendige Kältemittelmenge ergibt. Gleichwohl ist es natürlich für einige Anwendungen auch umsetzbar, dass das Motorkühlkältemittel zur Achskältemittelkühlung 4.a als eigener Zu- und Abfluss erfolgt und die Druckkältemittelzuführungen 7.z und 6.z zum Axial- 7 sowie zum Radial-Kältemittelgleitlager 6 separat erfolgen, wenn beispielsweise die Kältemittel-Temperaturen für die Kältemittelgleitlager bestimmten Bedingungen genügen müssen und die Temperatur-Anforderungen für Motorkühlung und Kältemittelgleitlager zu weit voneinander entfernt sind. Daher ist die gezeigte Darstellung nur beispielhaft.

Die dargestellte Rotorinnenkühlung 10 wird applikationsspezifisch nur bei besonderen Anforderungen an den Bauteile-Wärmehaushalt erforderlich sein, denn das an der rotierenden Innenwand von R.M nach R.R strömende Kältemittel wird über seinen verdampfenden Anteil schon nennenswert Wärme aus dem Rotorinnenraum abführen.

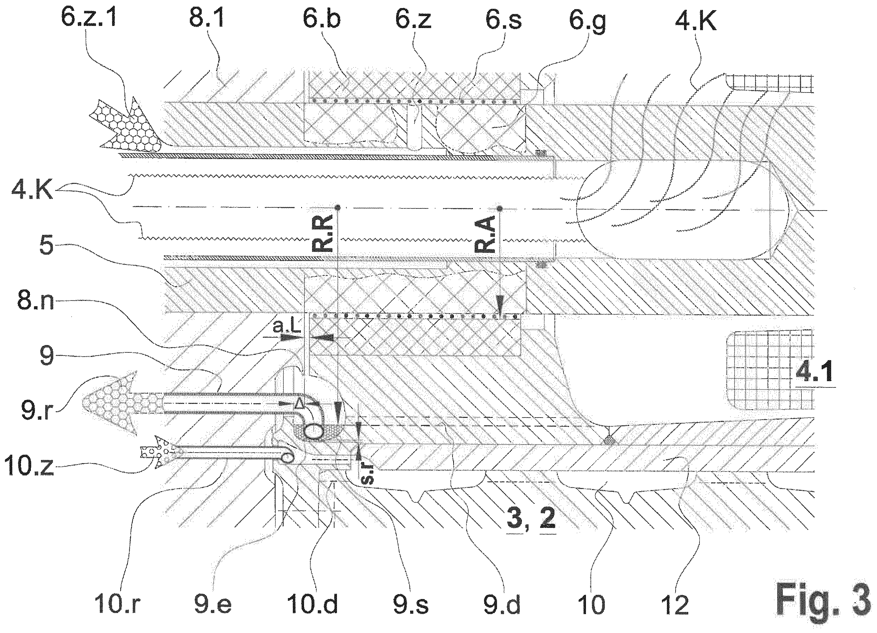

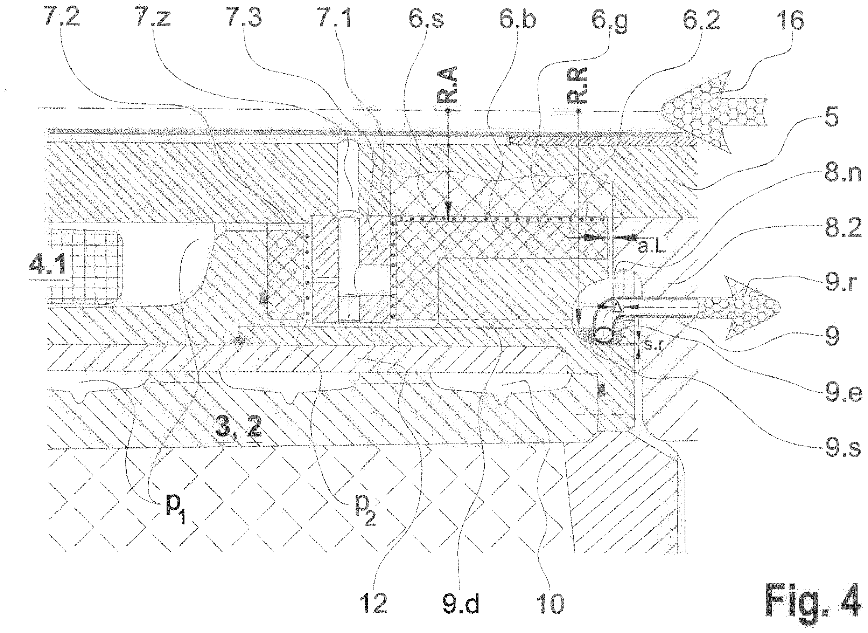

Der Einlassbereich ist noch detaillierter in Fig. 3 dargestellt und der Auslassbereich ist noch detaillierter in Fig. 4 dargestellt.

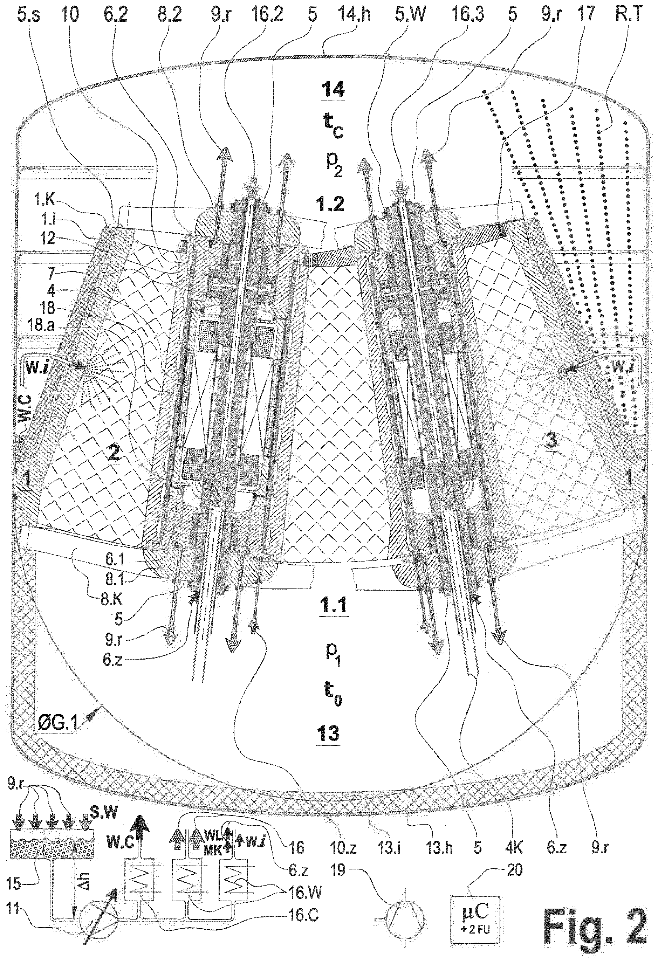

Fig. 2 zeigt beispielhaft eine Längsschnitt-Darstellung durch ein Verdrängerverdichter-Gesamtsystem bei stehender Ausführung mit dem Spindelrotorpaar 2 und 3 im umgebenden Verdichtergehäuse 1 und den feststehenden durchgehenden Trägerwellen 5 je Spindelrotor 2, 3, die mittels Achsträger 8 am Verdichtergehäuse 1 sowohl am Einlass 1 .1 als auch am Auslass 1.2 beidseitig abgestützt werden.

Bei der Ausführung zum Antriebsmotor 4 im Verhältnis zu den kältemittelabführenden Staurohren 9 an jedem Spindelrotor-Ende gilt stets die Zielsetzung, dass das Kältemittel fliehkraftbedingt zu den Staurinnen 9. s strömt. Demzufolge ist also der Motorspalt-Radius R.M stets kleiner als der Radius zum Staurinnenkältemittel, also: R.M < R.R insbesondere auch auf dem gesamten Kältemittelströmungsweg. Diese Bedingung ist in der Fig. 2 beispielhaft für den 3-zähnigen Spindelrotor 3 erfüllt, aber zu Demonstrationszwecken am 2z-Rotor 2 nicht erfüllt, indem dort der Fall R.M > R.R dargestellt ist, wenn beispielsweise ein sehr leistungsstarker Motor 4 erforderlich ist. Dann ist eine entsprechende Siphon-Verbindung 18 zur Kältemittel-Umführung am Motorrotor 4.2 vorzusehen, wobei über eine Austrittbohrung 18.a gewährleistet wird, dass sich im Motorspalt zwischen Motorstator 4.1 und Motorrotor 4.2 kein Restkältemittel ansammelt und somit unzulässige Reibung im Motorbereich ergäbe, indem dieses unvermeidbare Restkältemittel im Motorbereich über die Austrittbohrung 18.a abfließt bzw. zum Teil verdampft. Dabei steht der gesamte Motor 4 unter dem Druck $p_1$ und erfährt somit wegen der hohen Verdampfungsenthalpie eine gute Wärmeabführung, so dass die Effizienz des Motors 4 verbessert wird.

Der Kreisbogen mit ØG.1 ist zur Demonstration des zylindrischen Übergangsbereiches am Verdichtergehäuse 1 reingeklappt dargestellt und dient der Trennung zwischen dem Verdampferraum 13 und dem Verflüssigerraum 14 am Verdichtergehäuse 1 in diesem vorzugsweise zylindrischen Bereich.

Die Regulierung an der Kältemittelpumpe 11 hinsichtlich Druck und Volumenstrom ist dargestellt über einen Pfeil, der durch das Symbolzeichen für eine Kältemittelpumpe läuft. Neben Druck und Volumenstrom wird dann über die Wärmetauscher 16.W der jeweilige Kältemittelstrom auch noch hinsichtlich Temperaturniveau für jeden Betriebspunkt reguliert. Dabei gelten folgende Bezeichnungen:

WL      steht für Kältemittel zu den Kältemittelgleitlagern 6 und 7,

$\Delta h$      steht für die Höhen-Differenz, um den der Sammelraum 15 über der Kältemittelpumpe 11 steht.

MK      steht für das Kältemittel zur Motorkühlung 4.a,

S.W      steht für das Systemkältemittel zur Erfüllung der Kältemittel-Aufgabenstellung,

W.i      steht für das Kältemittel zur Einspritzung in den Arbeitsraum,

W.C      steht für Kondenskältemittel aus dem Verflüssigerraum 14.

Das Kondenskältemittel W.C wird für die oftmals gewünschte "Direktverflüssigung" zur Wärmeabführung an einen externen Wärmetauscher 16.C geführt, indem ein Teil dieses Kondenskältemittels nach seiner externen Wärmeabführung zwecks Oberflächenmaximierung als "Regentropfenwald" R.T zur direkten Kontakt-Kondensation genutzt wird. In dieser Fig. 2 ist dieser "Regentropfenwald" R.T im Verflüssigerraum 14 aus Darstellungsgründen vereinfachend nur auf einer Seite gezeigt, wird aber sehr wohl im gesamten Verflüssigerraum 14 umgesetzt.

Das potenzielle Problem zum Frostschutz für dieses am externen Wärmetauscher 16.C zu kühlende Kondenskältemittel W.C wird dabei vorzugsweise derart gelöst, dass im Betriebsstillstand das in den Leitungen noch befindliche Rest-Kondenskältemittel beispielsweise in den zumeist frostsicheren Innenbereich zurückfließt und/oder hinreichende Ausdehnungsbereiche erhält, die nicht zu Materialschäden durch Eisbildung wegen der Ausdehnung führen.

Bei den gewählten Bezeichnungen gilt grundsätzlich:
Einlass-Seite mit Index 1 und Auslass-Seite mit Index 2, sowie dem Folgeindex 2 für den 2z-Rotor und dem Folgeindex 3 für den 3z-Rotor, so dass für die jeweilige Druckkältemittel-Zuführung je Spindelrotor und je Druckseite folgende Bezeichnungen gelten:

- 6.z.1.2 = Kältemittelzuführung auf der Einlass-Seite zum 2z-Rotor
- 6.z.1.3 = Kältemittelzuführung auf der Einlass-Seite zum 3z-Rotor.

Auf der Auslass-Seite gilt für die 6.z - Kältemittelzuführung als Teilstrom vom Druckkältemittel 16

- 6.z.2.2 = Kältemittelzuführung auf der Auslass-Seite zum 2z-Rotor
- 6.z.2.3 = Kältemittelzuführung auf der Auslass-Seite zum 3z-Rotor.

Bei dem auf der Auslass-Seite 1.2 dargestellten Druckkältemittel 16 sind je Spindelrotor folgende Bezeichnungen zu unterscheiden:

- 16.2 = Druckkältemittel zum 2z-Rotor 2
- 16.3 = Druckkältemittel zum 3z-Rotor 3.

Die Aufteilung zwischen 7.z und 6.z je Spindelrotor erfolgt über die Querschnitte und Bohrungsanzahl bei den Zuführungen. Durch die Regulierbarkeit jedes Kältemittelstroms hinsichtlich Volumenstrom, Druck und Temperatur wird im Betrieb die jeweils effizienteste, also der geringste Gesamt-Energiebedarf, Arbeitsweise im Betrieb erreicht. In den nachfolgenden Figuren 3 und 4 sind die beiden Spindelrotor-Endbereiche, also Einlass- und Auslass-Seite, noch vergrößert dargestellt.

Die beispielhafte Schnitt-Darstellung in Fig. 3 als Detail-Vergrößerung zu Fig. 1 zeigt im Einlass-Bereich 1 .1 sowohl für den 2z-Rotor 2 als auch den 3z-Rotor 3 das Radial-Kältemittelgleitlager 6.1} mit der Druckkältemittel- Zuführung 6.z.1 und 6.z in dem nur wenige μm-dicken Gleitlagerspalt 6.s mit der Abstützlänge a.L, die mindestens um den Faktor 3 bis 5 kleiner als der Gleitlagerradius R.A ist.

Außerdem ist der am Staurohr-Ende 9.e eingestellte Spaltabstand s.r zur Staurohr-Positionierung dargestellt, um über den eintauchenden Querschnitt das geförderte Staurohrkältemittel hinsichtlich Druck und Menge bei der bekannten Drehzahl-Abhängigkeit an jedem Staurohr 9 einzustellen, wobei je Staurinne 9.s vorzugsweise mehrere Staurohre 9 am Umfang eintauchen.

Der Abstand $\Delta$ zur Abtropfnase 8.n sorgt abhängig von der Aufstellungsorientierung des Verdichters stehend oder liegend dafür, dass Leckagekältemittel der Staurinne 9.s wieder zugeführt wird.

Wie in Fig. 4 beispielhaft dargestellt als vergrößerte Abbildung aus Fig. 1 für den AuslassBereich 1 .2 strömt das zugeführte Druckkältemittel 16 zunächst zur Motorachskältemittelkühlung 4.a und dann als Druckkältemittelzuführung 7z zum Axial-Kältemittelgleitlager 7 sowie als Druckkältemittelzuführung 6z zum Radial-Kältemittelgleitlager 6.2 auf der Auslass-Seite.

Dabei trägt das Axial-Kältemittelgleit-Hauptlager 7.1 über den orts- und gestellfesten Abstützring 7.3 die Axialkraft $F_{ax}$ mit dem Widerlager 7 .2 zur axialen Positionssicherung jedes Spindelrotors in Rotorlängsachsrichtung.

Dabei kann die Motorachskältemittelkühlung 4.a natürlich alternativ über ein zusätzliches Innenrohr zur getrennten Zu- und Abführung auch als eigener Kreislauf ausgeführt werden und die Druckkältemittelzuführungen 6z und 7z zum Axial-Kältemittelgleitlager sowie zum Radial-Kältemittelgleitlager auf der Auslass-Seite unabhängig von der Motorachskältemittelkühlung 4.a separat erfolgen, wenn beispielsweise besondere Temperatur-Anforderungen zu erfüllen sind.

Ergänzend zu den Beschreibungen der Fig. 1 bis 4 enthalten die folgende Bezugszeichenliste und die Liste der Kennzeichnungen weitere Erläuterungen der einzelnen Bauteile:

Bezugszeichenliste der Fig. 1 - 4:

1 Verdichtergehäuse mit einer Einlass-Seite 1.1 mit Druck $p_1$ und einer Auslass-Seite 1.2 mit Druck $p_2$,

bei einlassseitig mind. 15%-ig größerem Abstand der Spindelrotorachsen als auslassseitig, wobei das Verdichtergehäuse vorzugsweise zugleich den Verdampferraum 13 mit dem Druck $p_1$ und der Verdampfungs-Temperatur $t_0$ vom Verflüssigerraum 14 mit dem Druck $p_2$ und der Kondensations-Temperatur $t_c$ über eine in diesem Bereich vorzugsweise zylindrische ØG.1-Gehäuseform trennt, wobei das für einige Anwendungen per Kühlstrom 1.K gekühlte Verdichtergehäuse vorzugsweise mit einer Isolierung 1.i zum Verflüssigerraum 14 versehen wird.

1.1 Verdichter-Einlass-Seite im Betrieb mit dem Druck $p_1$
1.2 Verdichter-Auslass-Seite im Betrieb mit dem Druck $p_2$
1.K Gehäuse-Kühlstrom
1.i Gehäuse-Isolierung

2 Spindelrotor, vorzugsweise mit 2-zähnigem Gasförder-Außengewinde, welches vorzugsweise aus einer Alu-Legierung besteht, kurz "2z-Rotor" genannt, und an jedem stirnseitigen Ende über Kältemittelgleitlagerbuchsen 6 auf seiner eigenen Trägerwelle 5 abgestützt wird.

3 Spindelrotor, vorzugsweise mit 3-zähnigem Gasförder-Außengewinde, welches vorzugsweise aus einer Alu-Legierung besteht, kurz "3z-Rotor" genannt, und an jedem stirnseitigen Ende über Kältemittelgleitlagerbuchsen 6 auf seiner eigenen Trägerwelle 5 abgestützt wird.

4 Außenläufer-Motor als Antriebsmaschine für jeden Spindelrotor, vorzugsweise als Synchronmotor ausgeführt zwischen beiden Spindelrotor-Lagern 6 im Rotorinneren also unterhalb des Gasförder-Außengewinde-Fußkreises positioniert, wobei die Motorkabel 4.K per Zentralbohrung in der Trägerwelle 5 aus dem Verdichter geführt werden, sowie außerdem mit elektronischer Motorpaar-Synchronisation 20 für den berührungsfreien Arbeitslauf der Spindelrotorpaarung im Betrieb 4.1 Motorstator mit Motorkabeln 4.K und vorzugsweise vergossenen Motorwicklungen, wobei das Statorpaket dreh- und ortsfest auf jeder Trägerwelle 5 sitzt und vorzugsweise unter dem Druck $p_1$ steht und über die Motorachskältemittelkühlung 4.a die Motorverlustwärme über den Druckkältemittelstrom 16 abgeführt wird.

4.2 Motorrotor drehtest mit dem jeweiligen Spindelrotor 2, 3 verbunden, vorzugsweise mit Permanentmagneten ausgeführt, mit dem Innen-Radius R.M und hinsichtlich der Zentrifugalkräfte entsprechend gesichert

4.a Motorachskältemittelkühlung

4.K Motorkabel

5 Gestell-/ortsfeste Trägerwelle für jeden Spindelrotor über die gesamte Rotorlänge durchgehend und je Seite von Achsträgern 8.1 und 8.2 gehalten, die sich am Verdichtergehäuse 1 abstützen, wobei zur gezielten Spieleinstellung die axiale Positionierung jedes Spindelrotors im Verdichtergehäuse vorzugsweise über Wellenmuttern 5.W an jedem Ende der Trägerwelle 5 und/oder über Schälscheiben

5.s zwischen den Achsträgern 8 und dem Verdichtergehäuse 1 erfolgt.

5.s Schälscheiben

5.W Wellenmuttern

6 Radial-Kältemittelgleitlager als Gleitlager mit dem Prozesskältemittel als Schmiermedium zur Aufnahme der Spindelrotor-Radialkräfte mit einer rotorfest drehenden Gleitlagerlaufbuchse 6.b mit kurzer Abstützlänge a.L, wobei "kurz" kleiner also vorzugsweise etwa mindestens um Faktor 3 bis 5 kleiner als der Gleitlagerradius R.A beim Gleitlagerspalt 6.s bedeutet, und einer vorzugsweise gezielt angepassten Gegenlauffläche 6.g auf der Trägerwelle 5 sowie mit Druckkältemittelzuführung 6.z, wobei als Gleitlager-Werkstoff vorzugsweise ein Keramik-Material zu wählen ist.

6.1 Radial-Kältemittelgleitlager auf der Verdichter-Einlass-Seite 1.1, wo der Druck $p_1$ herrscht

6.2 Radial-Kältemittelgleitlager auf der Verdichter-Auslass-Seite 1.2, wo der Druck $p_2$ herrscht

6.b Gleitlagerlaufbuchse, drehfest an jedem Ende des jeweiligen Spindelrotors 2, 3

6.g Gegenlauffläche auf der gestellfesten Trägerwelle 5

6.s Gleitlagerspalt zwischen Gleitlagerlaufbuchse 6.b und Gegenlauffläche 6.g

6.z Druckkältemittelzuführungen zum Radial-Kältemittelgleitlager

7    Axial-Kältemittelgleitlager zur Aufnahme der Axialkräfte jedes Spindelrotors

7.1 Axial-Kältemittelgleit-Hauptlager zur Aufnahme der Axialkräfte, die im Betrieb des Verdichters durch die Druckdifferenz $\Delta p = p_2 - p_1$ sowie abhängig von der Verdichter-Aufstellung stehend / liegend durch die Gewichtskräfte erzeugt werden.

7.2 Axial-Kältemittelgleit-Widerlager zur axialen Rotorgegenpositionierung und als Widerlager zum Axial-Kältemittelgleit-Hauptlager 7.1, wobei an dieser Lagerstelle am kleineren Innen-Durchmesser der Druck $p_1$ anliegt und am Außen-Durchmesser der Druck $p_2$ herrscht, also die nötige Drucktrennung bei der vorzugsweise durchgehenden Trägerwelle 5 erfolgt.

7.3 Mit der Trägerwelle fest verbundener Abstützring mit Druckkältemittelzuführungen 7.z zu jeder Axialgleitlagerfläche, wobei über die Querschnitte und Anzahl dieser Zuführungen die jeweilige Druckkältemittelmenge spezifisch zu jedem Kältemittelgleitlager eingestellt wird.

7.z Druckkältemittelzuführungen zum Axial-Kältemittelgleitlager

8    Achsträger zur Fixierung und Aufnahme jedes Trägerachs-Endes mit Abstützung am Verdichtergehäuse 1 auslassseitig als 8.2 und einlassseitig als 8.1 über Kragarme 8.K ausgeführt, um insbesondere am Einlass 1.1 den Durchtritt des Fördermediums zu ermöglichen.

8.K Kragarme

8.1 einlassseitige Kragarme

8.2 auslassseitige Kragarme

8.n Abtropfnase

9    Staurohre zur Rückführung 9.r des aus den Gleitlagern austretenden Lagerschmierungskältemittels mit Staurinne 9.s zur Sammlung dieses Kältemittels über die Durchlass-Öffnungen 9.d, die sowohl Kältemittel als auch Kältemitteldampf aus dem Rotorinnen-Achsraum passieren lassen, mit Ausbildung des Zentrifugal-Kältemittelrings, in den die gekröpften Staurohr-Enden 9.e zielgerecht eintauchen, wobei die zum Sammelbehälter 15 zurückzuführende Kältemittelmenge 9.r über Anzahl, Querschnitt und jeweilige Eintauchtiefe der Staurohre angepasst wird, und zudem Leckagekältemittel per Abstand $\Delta$ zur Abtropfnase 8.n der Staurinne 9.s zugeführt wird, und über unterschiedlich tiefes Eintauchen sowie entsprechende Querschnitts-Gestaltung die abzuführende Kältemittelmenge eingestellt wird, wobei das gekröpfte Staurohrende 9.e sowohl die Montage als auch die Positionierung insbesondere die Eintauchtiefe mit dem Spaltabstand s.r zum Rinnenboden gezielt ermöglicht.

9.d Durchlass-Öffnungen

9.e Staurohr-Ende

9.r Kältemittelrückführung per Staurohr

9.s Staurinne

10    Rotorinnen-Verdampferkühlung für alle Applikationen mit besonderen Temperatur-Anforderungen zylindrisch ausgeführt unter den Druck p1 mit gezielter Kältemittel-Zuführung 10.z per Zuführrohr 10.r und Dampfaustritt 10.d auf der Einlass-Seite 1.1

10.d Dampfaustritt

10.r Zuführrohr

10.z Kältemittelzuführung

11    Mindestens eine Kältemittelpumpe extern separat zur Versorgung der Gleitlager mit Druckkältemittel reguliert hinsichtlich Druck und Volumenstrom, z.B. mit 7 bar bei 6 Liter/min, wobei üblicherweise das Axialgleitlager 7 mehr Kältemittel als das Radialgleitlager 6 benötigt, was über die Ausführung hinsichtlich Durchmesser und Anzahl der Zuführbohrungen 6.z und 7.z erfolgt, wobei die Kältemittelpumpe 11 insbesondere beim Start des Verdichters zunächst den Kältemittelgleitlagern 6 und 7 die erforderliche Kältemittelmenge für den sogenannten "hydrostatischen" Schmierfilmaufbau zuführt, was besonders beim Starten für ein Radiallager mit stehender Achse und rotierender Laufbuchse wichtig ist, weil der Aufbau des hydrodynamischen Schmierfilms durch die Rotationsbewegung anders als bei zentral drehender Welle erfolgt. Die Kältemittelpumpe 11 bedient sich aus dem Sammelbehälter 15, der geodätisch um die Höhendifferenz .6.h oberhalb der Kältemittelpumpe 11 angeordnet ist, wobei mit zunehmender Verdichter-Drehzahl die Kältemittelpumpe 11 durch die Staurohrpumpen 9 entlastet wird, indem die Staurohrpumpen 9 drehzahlabhängig zunehmend mehr Kältemitteldruck aufbauen.

12    Trägerrohr zur Erzeugung der erforderlichen Biegesteifigkeit, insbesondere durch die Materialwahl beispielsweise als rostfreier Stahl für jede Spindelrotor-Rotationseinheit, wobei der Spindelrotoraußengewindekörper vorzugsweise aus einer Alu-Legierung bestehend sich auf diesem Trägerrohr außen drehfest abstützt und dieses Trägerrohr auf der Innenseite sowohl die Kältemittelgleitlager hält als auch den Motorrotor 4.2 zur Einleitung der Antriebsleistung in den Spindelrotor, um die Verdichteraufgabe zu erfüllen.

13    Verdampferraum, der im Betrieb unter dem Druck $p_1$ steht und mit einer Topfhaube 13.h am Verdichtergehäuse 1 über dessen vorzugsweise ØG.1-Gehäusegestaltung in diesem Bereich abdichtend gehalten wird und mit einer wärmetechnischen Isolierung 13.i versehen ist.

13.h Verdampferraum-Topfhaube

13.i Verdampferraum-Isolierung

14    Verflüssigerraum, der im Betrieb unter dem Druck

$p_2$ steht und mit einer Topfhaube 14.h am Verdichtergehäuse 1 über dessen vorzugsweise OG. 1-Gehäusegestaltung in diesem Bereich abdichtend gehalten wird. 14.h Verflüssigerraum-Topfhaube

15. Sammelbehälter für das Prozesskältemittel, der geodätisch um $\Delta h$ über der Kältemittelpumpe 11 steht, vorzugsweise nicht nur für das Rückführkältemittel 9.r, sondern auch für Systemkältemittel S.W

16 Druckkältemittelstrom von der Kältemittelpumpe 11 gefördert und am auslassseitigen Ende jeder Trägerwelle 5 zentral zugeführt, wobei dieses Kältemittel vorzugsweise zunächst die Motorachskältemittelkühlung 4.a durchströmt und dann über Zuführungen 7.z zum Axial-Kältemittelgleitlager 7 sowie über die Zuführung 6.z zum auslassseitigen Radial-Kältemittelgleitlager 6.2 an jedem Spindelrotor strömt, wobei am einlassseitigen Ende jeder Trägerwelle die Kältemittelzuführung 6.z ebenfalls von der Kältemittelpumpe reguliert unter dem geforderten Druck und Volumenstrom erbracht wird, wobei applikationsspezifisch per Wärmetauscher 16.W die Kältemitteltemperatur je Teilstrom zur Leistungsoptimierung gezielt eingestellt wird, und außerdem die Kältemittelpumpe auch die Kältemittel-Einspritzung W.i mit Sprühnebel-Bildung in den Verdichter-Arbeitsraum übernimmt, um die Verdichter-Effizienz zu erhöhen, wobei die Kältemittelpumpe 11 für die verschiedenen Betriebsbedingungen gezielt regulierbar ist dargestellt durch den Pfeil in dem Symbol hinsichtlich Volumenstrom und erzeugtem Druck, wobei jeder Wärmetauscher 16.W in jedem der genannten Druckkältemittel-Teilströme die Kältemitteltemperatur in jedem Betriebspunkt einstellt, um den geringsten Gesamtenergiebedarf zu erreichen.

16.C Wärmetauscher zur externen Wärmeabführung bei "Direktverflüssigung" über Kühlung für kondensiertes Kältemittel W.C, welches dann zurückgeführt als "Regentropfenwald" R.T zur direkten Kontakt-Kondensation im Verflüssigerraum 14 genutzt wird.

16.W Wärmetauscher in den Druckkältemittel-Zuführungen zu folgenden Stellen:

- Druckkältemittelzufluss 6.z.1 zum Radial-Kältemittelgleitlager 6.1 auf der Einlass-Seite
- Druckkältemittelzufluss 6.z.2 zum Radial-Kältemittelgleitlager 6.2 auf der Auslass-Seite
- Druckkältemittelzufluss 7.z zum Axial-Kältemittelgleitlager 7
- Druckkältemittelzufluss 16 zum Motorachskältemittelkühlung 4.a

- Druckkältemittelzufluss W.i zur Einspritzung in den Verdichter-Arbeitsraum sowie applikationsspezifisch außerdem mit gezielter Kühl- Kältemittelzuführung zu folgenden Stellen:

  - Rotorinnenkühlung 10
  - Gehäusekühlung 1.K

17 Notfall-Synchronisierungs-Verzahnung, wenn beispielsweise bei Stromausfall die elektronische Motorpaar-Spindelrotor-Synchronisation zunächst zwar in generatorischen Betrieb geht, um synchronisiert also ohne mechanische Berührung zwischen den Spindelrotoren gezielt herunterzufahren, aber bei geringen Drehzahlen die kinetische Energie zur Stromversorgung nicht mehr ausreicht, dann sorgt diese Notfall-Synchronisierungs-Verzahnung dafür, dass die kritische Berührung zwischen den Arbeitskammerflanken des Gasförder-Außengewindes beider Spindelrotore 2 und 3 vermieden wird, wobei es bei der Ausführung zur elektronischen Motorpaar-Spindelrotor-Synchronisation 20 auch Lösungen gibt, bei denen diese Notfall-Synchronisierungs-Verzahnung entfällt, also gar nicht mehr eingebaut wird.

18 Siphon-Verbindung zur Kältemittel-Umführung am Motor mit zur Einlass-Seite führenden Austrittbohrungen 18.a für den Fall, dass der Motor 4 größer auszuführen ist, also wenn R.M > R.R ist Anzustreben ist insbesondere bei der Motorauslegung jedoch vorzugsweise folgende Bedingung: R.M < R.R

19 Vakuumpumpe mit entsprechender Kältemitteldampfverträglichkeit zur Erzeugung des Unterdrucks in dem Kältemittel-Gesamtsystem, insbesondere genutzt, um Fremdgase, die in das Kältemittel-Gesamtsystem eingedrungen sind, als Evakuierungsvorgang bei Betriebsstillstand wieder abzupumpen.

20 Elektronische Motorpaar-Spindelrotor-Synchronisation als Blockkasten mit $\mu$C + 2FU dargestellt mit dem Mikro-Controller als $\mu$C gezeigt, der die beiden Frequenzumrichter als FU benannt zu jedem Antriebsmotor 4 für jeden Spindelrotor 2 und 3 derart reguliert steuert, dass die beiden Spindelrotoren im Betrieb ohne Berührung gegensinnig rotierend arbeiten.

Liste der Kennzeichnungen der Fig. 1 - 4:

ØG.1 Durchmesser am Verdichtergehäuse 1 im vorzugsweise zylindrischen Trenn-Bereich von Verdampferraum 13 und Verflüssigerraum 14

a.L Abstützlänge zwischen Gleitlagerbuchse 6.b und Achsträger 8, wobei der Wert für a.L vorzugsweise um mindestens Faktor 3 bis 5 kleiner ist als der Gleitlagerspalt-Radius R.A

$\Delta$     Abstand zwischen Abtropfnase 8.n und Staurinne 9.s, um abhängig von der Aufstellungsorientierung der Verdichtermaschine stehend oder liegend Leckagekältemittel der Staurinne 9.s zuzuführen

$\Delta h$     geodätische Höhendifferenz, um die der Sammelbehälter 15 über der Kältemittelpumpe 11 steht

$F_{ax}$     Axialkräfte je Spindelrotor, entstehend durch die Druckdifferenz zwischen $p_2$ und $p_1$ sowie abhängig von der Verdichteraufstellung also stehend oder liegend die Rotorgewichtskräfte

R.A     Radius im Gleitlagerspalt 6.s am Radial-Kältemittelgleitlager 6

R.M     Innen-Radius auch Luftspalt-Radius des Motorrotors 4.2, der vorzugsweise stets kleiner als der Staurinnenkältemittel-Radius R.R ausgeführt wird.

R.R     Radius zum Staurinnenkältemittel, welches von mehreren Staurohren 9 als Rückstrom 9.r gefördert wird, wobei der Wert für R.R vorzugsweise nicht kleiner als R.M ausgeführt wird, damit im Motorbereich das Kältemittel fliehkraftbedingt zu jeder Staurinne 9.s an jedem Spindelrotorende getrieben wird.

R.T     Regentropfenwald als Oberflächen-Maximierung zur direkten Kontakt-Kondensation im Verflüssigerraum 14

s.r     Spaltabstand des jeweiligen Staurohr-Endes 9.e zum Boden der Staurinne 9.r

S.W     Systemkältemittel zur Erfüllung der Kernaufgabe des Kältemittel-Verdrängerverdichtersystems:

> • Verdampfung mit Wärmeaufnahme im Verdampferraum 13 unter dem Druck $p_1$
> • Verdichtung von Kältemittel vom Druck $p_1$ auf Druck $p_2$ in der Verdrängermaschine mit den beiden gegenläufigen Spindelrotoren 2 und 3
> • Verflüssigung vorzugsweise als "Direktverflüssigung" ausgeführt mit Wärmeabgabe im Verflüssigerraum 14 unter dem Druck $p_2$

W.C     Kondensiertes Kältemittel zur "Direktverflüssigung" über den externen Wärmetauscher 16.c gekühlt und dann zurückgeführt als "Regentropfenwald" R.T im Verflüssigerraum 14 zur direkten Kontakt-Kondensation unter dem Druck $p_2$ genutzt

W.i     Kältemitteleinspritzung in den Verdichter-Arbeitsraum, vorzugsweise als feiner Sprühnebel und etwa im Bereich der halben Rotorlänge mit $\pm$ 30%

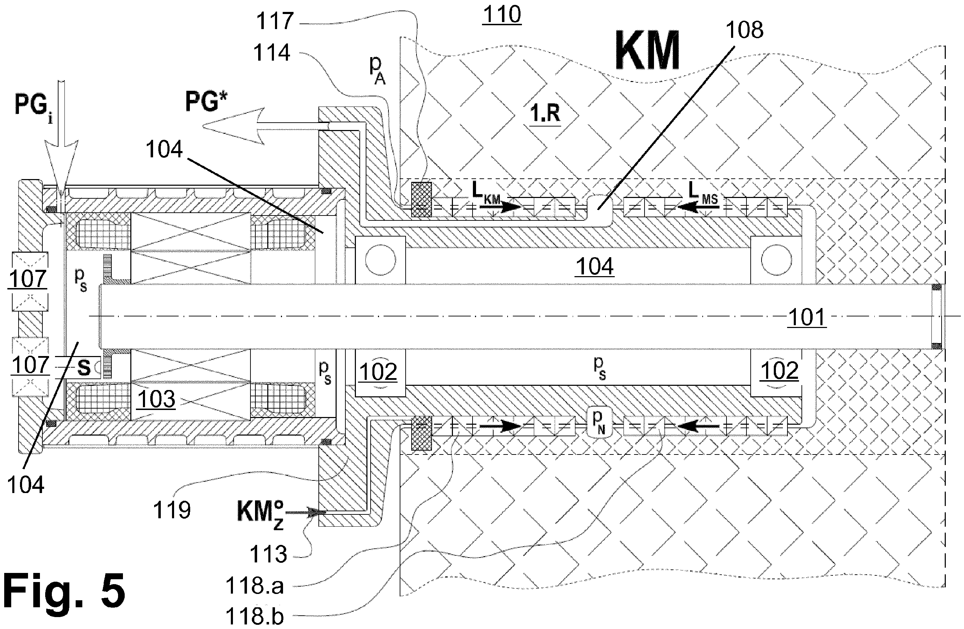

Fig. 5 zeigt beispielhaft eine Arbeitsraumwellendurchführung 114 bei einseitiger Spindelrotorlagerung als sogenannte "fliegende" Rotorlagerung, die zur Erhöhung der biegekritischen Drehzahl vorzugsweise über die Lagerkartusche 119 in den Spindelrotorkörper 101.R hineingezogen wird. In diesem Ausführungsbeispiel werden zur Rotorlagerung die bekannten Wälzlager 102 eingesetzt, deren Fett- oder Öl-Schmierung vor dem Kältemittel mit einem Kältemittelanteil mit Hydroxygruppe generell zu schützen ist. Dazu gibt es neben dem neutralen Raum 108 mit dem Druck $p_N$

- auf der einen Seite ein arbeitsraumseitiges Leitwertebremssystem 118.a mit dem zu minimierenden Leckage-Kältemittelstrom $L_{KM}$ vom Verdichter-Arbeitsraum 110 mit dem Druck $p_A$ an der Wellendurchführung 114 und
- auf der anderen Seite ein seitenraumseitiges Leitwertebremssystem 118.b mit dem Seitenraum- Leckagestrom $L_{MS}$ vom Seitenraum 104, dessen Druck $p_S$ über die Zuführung von $PG_i$ eingestellt wird.

Durch gezielte Absaugung von PG* aus dem neutralen Raum 108 sowie regulierte Zuführung von $PG_i$ in den Seitenraum 104 wird folgende Druckbedingung ständig erfüllt:

$$p_S > p_A > p_N.$$

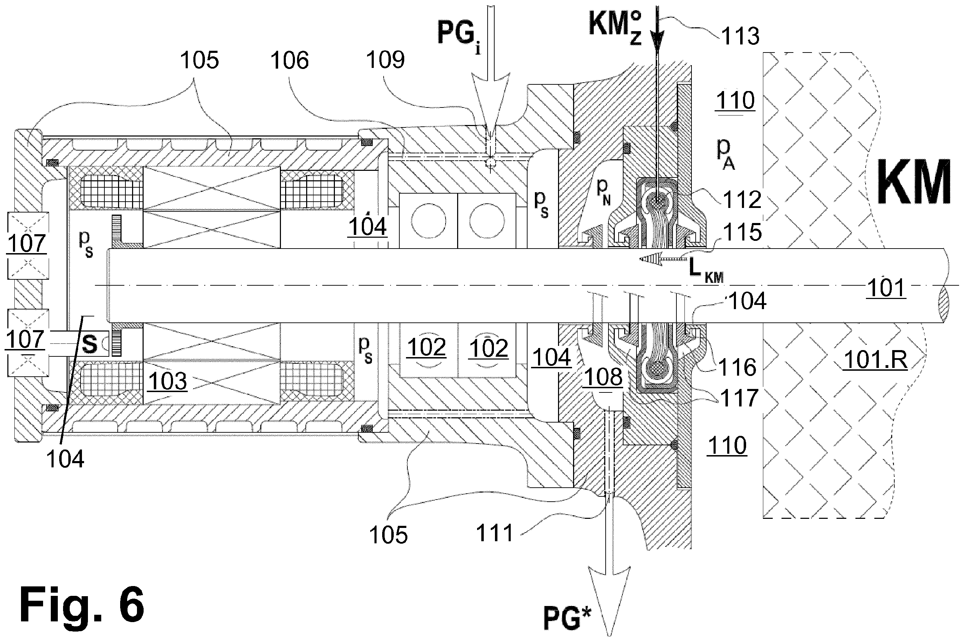

Zur gewünschten Minimierung des Leckage-Kältemittelstroms $L_{KM}$ ist vorzugsweise bzw. optional im arbeitsraumseitigen Leitwertebremssystem 118.a ein Sperrdampfraum 117 mit Zuführung von $KM°_z$ einzurichten, wobei über die Regulierung der Zuführmenge von $KM°_z$ die Menge des Leckage-Kältemittelstroms $L_{KM}$ gezielt eingestellt werden kann. Der Sperrdampfraum 117 ist in Fig. 6 detaillierter dargestellt.

Fig. 6 zeigt beispielhaft eine einfache Arbeitsraumwellendurchführung 114 bei beidseitiger Spindelrotorlagerung mit fett- oder ölgeschmierten Wälzlagern 102, wobei im Sperrdampfraum 117 eine Bürstendichtung 112 mit der Zuführung von $KM°_z$ und dem Leckage-Kältemittelstrom $L_{KM}$ detaillierter dargestellt ist. Dabei wird über die gezielt zugeführte $KM°_z$ -Menge die hohe Volumenzunahme durch Verdampfung, indem durch die Reibung der Borsten die für die Verdampfung notwendige Wärmeenergie erzeugt wird und durch das begrenzte Volumen des Sperrdampfraums 117 zum entsprechenden Druckanstieg führt, kontrolliert zu der gewünschten Sperrwirkung für den Leckagestrom $L_{KM}$ im Sinne der Reduzierung bzw. Minimierung genutzt.

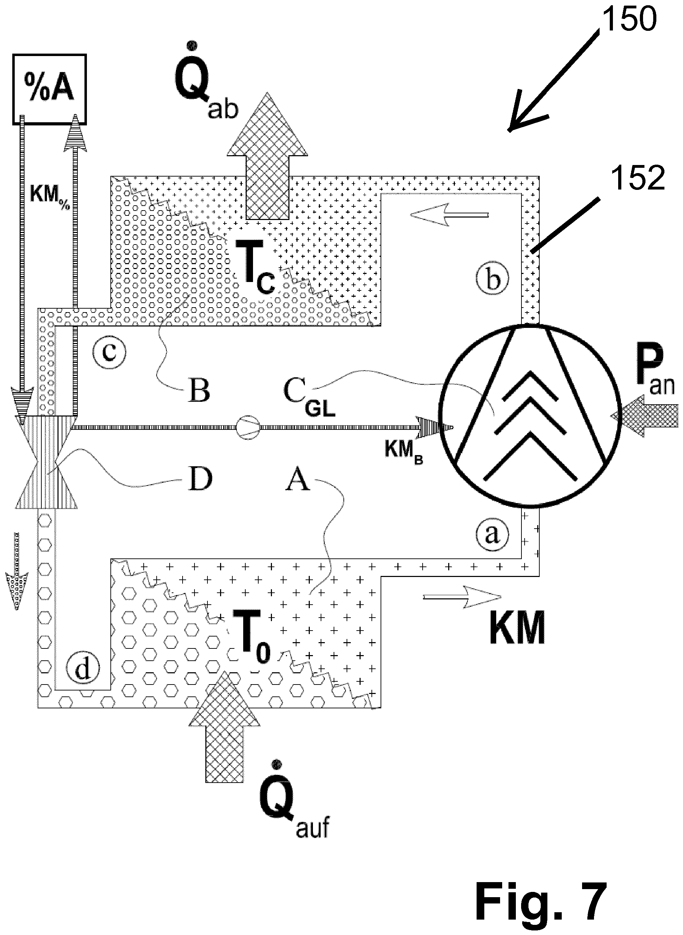

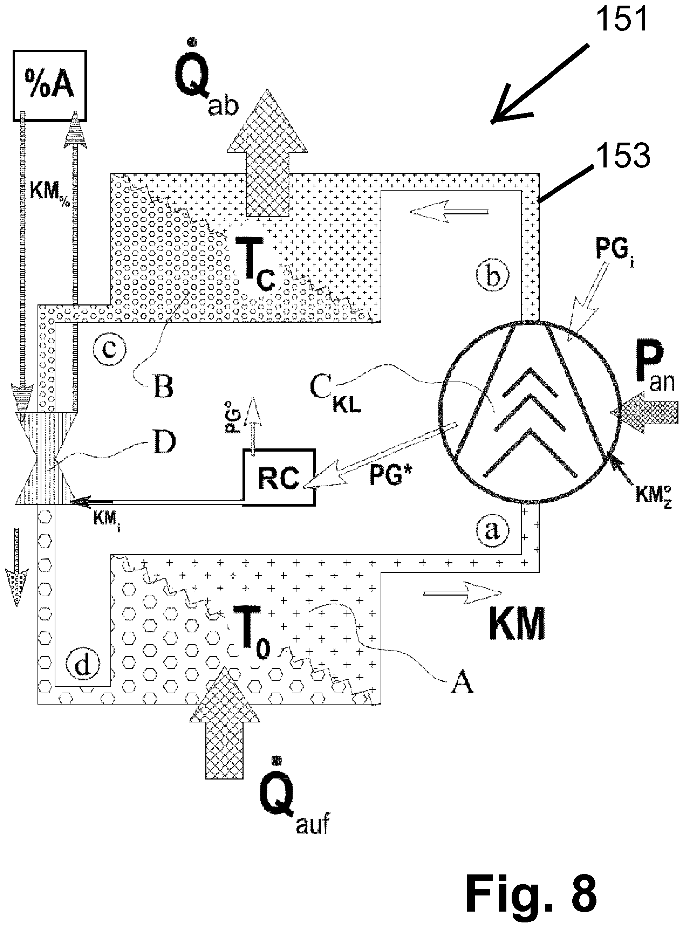

Der Leckage-Kältemittelstroms $L_{KM}$ ist zu minimieren, weil dadurch der Verlust von Kältemittel KM für den Prozess gemäß Fig. 7 und Fig. 8 minimiert wird. Die Abschirmvorrichtungen 116 vor den Wellendurchtritten in diesem Sperrdampfraum 117 sorgen dafür, dass überschüssiges Kältemittel, welches noch nicht verdampft und somit also noch flüssig ist, von den Wellendurchtritten hinreichend und einfach ferngehalten wird und somit weiterhin dem Vorgang der Verdampfung im Sperrdampfraum 117 erhalten bleibt.

Fig. 7 zeigt eine einfache Darstellung einer thermischen Arbeitsmaschine 150 mit einem KM-Kreislauf 152 mit dem Verdrängerverdichter $C_{GL}$ mit Gleitlager gemäß den Fig. 1 - 4 und damit die einfachste Ausführung mit dem geringsten Aufwand, indem für die Gleitlagerung des Verdichters vom Typ $C_{GL}$ das Kältemittel mit einem Kältemittelanteil mit Hydroxygruppe als Betriebsmittel auch genau für diese Verdichterlager über den Kältemittel-Teilstrom KMs genutzt wird. Die applikationsspezifische Kältemittel - Anpassung bei den prozentualen Anteilen des Kältemittelanteil mit Hydroxygruppe ist stark vereinfacht über die Zu- und Abführung des Kältemittel-Abzweigteilstrom KM% zur Kältemittel -Einstell-Vorrichtung %A dargestellt, ebenso auch in der Fig. 8 zu sehen.

Fig. 8 zeigt eine einfache Darstellung einer thermischen Arbeitsmaschine 151 mit einem KM-Kreislauf 153 mit dem Verdrängerverdichter $C_{KL}$ mit Wälzlagerung. Es werden an diesem Verdichtertyp $C_{KL}$ die Maßnahmen gezeigt, die zum Schutz der Bauteile, insbesondere der Lager 2, in den Seitenräumen 4 erforderlich sind:

- Zuführung von PGi,
- Zuführung von KM°z als Option
- Absaugung von PG*.

Dabei kann die Zuführung von PGi in jeden Seitenraum 104 kann durch das Verdampfen von KM°z im Sperrdampfraum 117 dank geschlossenem Seitenraum auf ein Minimum reduziert werden. Dabei ist vorrangig der Druck $p_S$ im Seitenraum 104 ist zu überwachen, indem PG* abgeführt also abgesaugt wird und im Verdichter die genannte Druckbedingung erfüllt wird:

$$p_S > p_A > p_N.$$

Über die Recycling-Vorrichtung RC können aus dem PG*-Gemisch die abgesaugten Kältemittel-Teile gezielt auskondensiert und weiterverwendet werden, indem dies als KMi -Strom beispielsweise im Bereich des Drosselorgans D dem Kältemittel-Kreislauf wieder zugeführt wird, wenn sich der Aufwand lohnt. Sinngemäß ähnlich kann insbesondere bei Ölschmierung für die Lagerung 102 auch mit abgesaugten Schmierstoff-Teilchen verfahren werden, die im Seitenraum-Leckagestrom $L_{MS}$ mitgerissen wurden und nach dem Auskondensieren wieder der Lagerschmierung im Seitenraum 104 zugeführt werden.

Bei den einer thermischen Arbeitsmaschinen bzw. Kältemittel-Kreisläufen in den Fig. 7 und 8 wird eine Kältemittel KM auf Wasserbasis verwendet, das einen Kältemittelanteil mit einer Hydroxygruppe, insbesondere Ethanol enthält. Der Kältemittelanteil beträgt beispielsweise 30%, kann aber applikationsbedingt auch niedriger oder höher liegen. Es ist auch möglich, dass statt Ethanol ein anderer, insbesondere einwertiger Alkohol, beispielsweise Propan-1-ol verwendet wird.

Damit wird das genannte Kältemittel aus einer Mischung aus Wasser und einem Kältemittelanteil mit einer Hydroxygruppe als Kältemittel für eine thermische Arbeitsmaschine mit einem Verdampfer, einem Verflüssiger, einem Verdichter und einem Drosselorgan verwendet.

Die in Fig. 7 und 8 dargestellten thermischen Arbeitsmaschinen sind damit thermische Arbeitsmaschine mit einem Verdampfer, einem Verflüssiger, einem Verdichter, einem Drosselorgan und einem Kältemittelkreislauf mit einem Kältemittel aus einer Mischung aus Wasser und einem Kältemittelanteil mit einer Hydroxygruppe.

Beim Betreiben der in Fig. 7 und 8 dargestellten thermischen Arbeitsmaschinen wird damit ein Verfahren zum Betreiben einer thermischen Arbeitsmaschine mit einem Verdampfer, einem Verflüssiger, einem Verdichter, einem Drosselorgan ausgeführt, bei dem als Kältemittel ein Kältemittel aus einer Mischung aus Wasser und einem Kältemittelanteil mit einer Hydroxygruppe eingesetzt wird

Ergänzend zu den Beschreibungen der Fig. 5 bis 8 enthalten die folgende Bezugszeichenliste und die Liste der Kennzeichnungen weitere Erläuterungen der einzelnen Bauteile:

Bezugszeichenliste der Fig. 5 - 8:

| | |
|---|---|
| 101 | Trägerwelle mit Spindelrotor 101.R der Rotationsverdrängermaschine zur Verdichtung von Kältemittel im Verdichter-Arbeitsraum 110 mit dem jeweiligen Arbeitsraum-Druck $p_A$ an jeder Wellendurchführung 114 |
| 101.R | Spindelrotor mit Außenfördergewinde als Rotationsverdrängerkörper drehfest auf der Trägerwelle 101 |
| 102 | Lagerung für die Trägerwelle, beispielsweise als Hybrid-Wälzlagerung ausgeführt, vorzugsweise jedoch als Kältemittel-Gleitlagerung |
| 103 | Antriebsmotor zur Trägerwelle 101 mit Sensor S für die elektronische Motorpaar-Synchronisation, wobei die Motorwicklungen der Antriebsmotorstatoren vorzugsweise vergossen sind |
| 104 | Verdichter-Seitenraum mit dem Druck ps, abgeschlossen über Gehäuse-Bauteile 105 im Sinne von gasdicht und nur über die Wellendurchführung 114 mit dem Verdichter-Arbeitsraum 110 verbunden, wobei sich im Seitenraum mindestens die Lagerung 102 befindet, sowie je Trägerwelle 101 auch der Antriebsmotor 103 mit Sensor S bei elektronischer Motorpaar-Synchronisation |
| 105 | Gehäuse-Bauteile, um den Seitenraum 104 |

| | |
|---|---|
| | gasdicht zu umschließen |
| 106 | Bypass-Bohrung zur Vermeidung schädlicher Gasströmung durch die Lagerung 102 |
| 107 | Kabeldurchführungen, gasdicht |
| 108 | neutraler Raum mit dem Druck $p_N$ zwischen Seitenraum 104 und Verdichter-Arbeitsraum 110 zur Abführung von PG* |
| 109 | Zuführung von Schutzgas sogen. Purge-Gas als $PG_i$ vorzugsweise in die Bypass-Bohrung 106 |
| 110 | Verdichter-Arbeitsraum der Rotationsverdrängermaschine zur Verdichtung von Kältemittel |
| 111 | Abführung von PG* derart, dass der Leckage-Kältemittelstrom $L_{KM}$ eingestellt wird |
| 112 | Wellendichtung, vorzugsweise als Bürstendichtung, zur Abdichtung der Wellendurchführung 114 zwischen Arbeitsraum 110 und Seitenraum 104 mit der Aufgabe zur Minimierung des Leckage-Kältemittelstroms |
| 113 | Zuführung von KM°z, vorzugsweise als reines Wasser, zum Sperrdampfraum 117 |
| 114 | Wellendurchführung der Trägerwelle 101 als Verbindung zwischen Seitenraum 104 und Verdichter-Arbeitsraum 110 |
| 115 | Leckage-Kältemittelstrom $L_{KM}$ insbesondere beim Sperrdampfraum 117 |
| 116 | Abschirmvorrichtungen als mehrfacher Schutz der Lagerung vor eventuellen Flüssiganteilen und zur Zurückhaltung an den Wellendurchtritten von überschüssigem, also noch nicht verdampftem Kältemittel von der KM°z-Zuführung |
| 117 | Sperrdampfraum mit Zufuhr von KM°z zur $L_{KM}$-Dämpfung, beispielsweise mit Wellendichtung 112 unter gezielter Nutzung der Volumenzunahme durch Verdampfung in einem begrenzten Raum, nämlich diesem Sperrdampfraum |
| 118 | Leitwertebremssystem bzw. Strömungswiderstand zur Strömungswiderstandserhöhung einer Wellendurchführung ausführbar beispielsweise als enger Spalt vorzugsweise mit Strömungsunterbrechungswiderständen wie die Hintereinanderschaltung mehrerer Nuten möglichst scharfkantig, Sperrdampfraum, Kolbenringen, Gewindedichtung bis hin zu Zentrifugaldichtung |
| 118.a | Leitwertebremssystem bzw. Strömungswiderstand arbeitsraumseitig |
| 118.b | Leitwertebremssystem bzw. Strömungswiderstand seitenraumseitig |
| 119 | Lagerkartusche zur Aufnahme der Lager 102 in den Spindelrotor 101.R hineinragend bei einseitiger sogenannter "fliegender" Spindelrotorlagerung |

Liste der Kennzeichnungen der Fig. 5 - 8:

| | |
|---|---|
| KM | Kältemittel im Kreislauf mit den üblichen Richtungspfeil-Angabe n => bei folgenden Positionen:<br>a KM nach Verlassen des Verdampfers A vor dem Eintritt in den Verdichter C<br>b KM nach Verlassen des Verdichters C vor dem Eintritt in den Verflüssiger B<br>c KM nach Verlassen des Verflüssigers B vor dem Eintritt in das Drosselorgan D<br>d KM nach Verlassen des Drosselorgans D vor dem Eintritt in den Verdampfer A |
| A | Verdampfer mit Wärmeaufnahme $\dot{Q}_{auf}$ bei der Prozess-Temperatur $T_0$ |
| B | Verflüssiger mit Wärmeabgabe $\dot{Q}_{ab}$ bei der Prozess-Temperatur Tc |
| C | Verdichter, vorzugsweise als Verdrängermaschine ausgeführt, mit der Leistungsaufnahme $P_{an}$ als:<br>$C_{GL}$ Verdrängerverdichter mit Gleitlagerungen<br>$C_{KL}$ Verdrängerverdichter mit Wälzlagerungen, fettgeschmiert oder ölgeschmiert bei folgenden Druckwerten im Verdichter C:<br>$p_A$ Druck im Arbeitsraum 10 vor der jeweiligen Wellendurchführung zum Seitenraum 4<br>$p_N$ Druck im neutralen Raum 8 je Arbeitsraumwellendurchführung 14<br>$p_S$ Druck im Verdichter-Seitenraum 4 |
| D | Drosselorgan |
| %A | KM-Einstell-Vorrichtung zur prozentualen Kältemittel-Zusammensetzung, indem der Kältemittelanteil mit Hydroxygrupp applikationsspezifisch den jeweiligen Anforderungen und Bedingungen angepasst wird |
| $PG_i$ | Purge-Gas-Einlass als Zuführung von Schutzgas für die Elemente im Seitenraum 4 |
| PG* | Purge-Gas-Auslass als praktisch permanenter Absaugvorgang, mit dessen Mengen-Regulierung der Leckagestrom $L_{KM}$ eingestellt wird, indem vorzugsweise über die KM°z -Zuführmenge die Verdampfung und damit der Strömungswiderstand im Sperrdampfraum 17 angepasst wird |
| PG° | Gas-Auslass am Recycling Leckage-Kältemittelstrom durch das arbeitsraumseitige Leitwertebremssystem |
| $L_{KM}$ | 18.a Seitenraum-Leckagestrom durch das seitenraumseitige Leitwertebremssystem |
| $L_{MS}$ | 18.b Kältemittel-Teilstrom-Zuführung zur KM-Versorgung am Verdichter $C_{GL}$ mit |
| $KM_B$ | Gleitlagerung |
| KM°z | Zuführung von vorzugsweise Wasser zum Sperrdampfraum 17 |
| $KM_i$ | Zuführung von Kältemittel KM, beispielsweise in der Nähe zum Drosselorgan D, primär als Ausgleich der je Wellendurchführung 14 abgehenden Leckage-Kältemittelströme $L_{KM}$ |
| $KM_\%$ | Kältemittel-Abzweigteilstrom zur Einstellung der prozentualen KältemittelZusammenset- |

zung mit Hin- und Rückführung zur KM-Einstell-Vorrichtung % A

RC Recycling für das abgesaugte PG*-Gemisch durch Auskondensieren der jeweiligen Bestandteile

S Sensor bei elektronischer Motorpaar-Synchronisation

**Patentansprüche**

1. Thermische Arbeitsmaschine mit einem Verdampfer (A), einem Verflüssiger (B), einem Verdichter (C), einem Drosselorgan (D) und einem Kältemittelkreislauf (152, 153) mit einem Kältemittel auf Wasserbasis, welches einen Kältemittelanteil mit einer Hydroxygruppe aufweist,
**gekennzeichnet durch**
eine Kältemittel-Einstell-Vorrichtung (%A), mittels welcher der Kältemittelanteil mit der Hydroxygruppe des Kältemittels während des Betriebs der thermischen Arbeitsmaschine (150, 151) verändert werden kann.

2. Thermische Arbeitsmaschine nach Anspruch 1,
**dadurch gekennzeichnet, dass**
der genannte Kältemittelanteil des Kältemittels aus einem Alkohol, insbesondere einem einwertigen Alkohol, speziell Ethanol oder Propan-1-ol besteht.

3. Thermische Arbeitsmaschine nach Anspruch 1 oder 2,
**dadurch gekennzeichnet, dass**
der genannte Kältemittelanteil des Kältemittels mindestens 10 %, insbesondere mindestens 20 %, speziell mindestens 30 % des gesamten Kältemittels beträgt.

4. Thermische Arbeitsmaschine nach Anspruch 1, 2 oder 3,
**dadurch gekennzeichnet, dass**
der genannte Kältemittelanteil mit einer Hydroxygruppe am gesamten Kältemittel höchstens so hoch, dass das Kältemittel bei Betriebsbedingungen der thermischen Arbeitsmaschine nicht entzündlich ist.

5. Thermische Arbeitsmaschine nach einem der Ansprüche 1 bis 4,
**dadurch gekennzeichnet, dass**
alle elektrischen Bauteile der thermischen Arbeitsmaschine explosionsgeschützt ausgeführt sind.

6. Thermische Arbeitsmaschine nach einem der Ansprüche 1 bis 5,
**dadurch gekennzeichnet, dass**
der Verdichter ($C_{GL}$) als eine 2-Wellen-Rotations-Verdrängermaschine mit einem um eine erste Trägerwelle (5) rotierbaren ersten Spindelrotor (3) und einem um eine zweite Trägerwelle (5) rotierbaren zweiten Spindelrotor (3) ausgeführt ist, welche mittels mit dem Kältemittel betriebenen Gleitlagern (6, 7) gelagert sind.

7. Thermische Arbeitsmaschine nach Anspruch 6,
**dadurch gekennzeichnet, dass**
der erste Spindelrotor (5) von einer ersten Antriebsmaschine (4) und der zweite Spindelrotor (5) von einer zweiten Antriebsmaschine (4) angetrieben wird und zur Kühlung wenigstens einer der Antriebsmaschinen (4) das genannte Kältemittel eingesetzt wird.

8. Thermische Arbeitsmaschine nach Anspruch 6 oder 7,
**dadurch gekennzeichnet, dass**
der Verdichter ($C_{GL}$) wenigstens eine Staurohrpumpe (9) aufweist, mittels welcher dem Verdichter ($C_{GL}$) zugeführtes Kältemittel abgeführt wird.

9. Thermische Arbeitsmaschine nach Anspruch 8,
**dadurch gekennzeichnet, dass**
die Staurohrpumpe (9) über eine um die entsprechende Trägerwelle (5) herum verlaufende Staurinne (9.s) gespeist wird, welche so ausgeführt und angeordnet ist, dass sich im Verdichter ($C_{GL}$) befindliches Kältemittel im Betrieb des Verdichters ($C_{GL}$) in der Staurinne (9.s) sammelt.

10. Thermische Arbeitsmaschine nach einem der Ansprüche 1 bis 5,
**dadurch gekennzeichnet, dass**
der Verdichter ($C_{KL}$) als eine 2-Wellen-Rotations-Verdrängermaschine mit einem um eine erste Trägerwelle (101) rotierbaren ersten Spindelrotor (101.R) und einem um eine zweite Trägerwelle (101) rotierbaren zweiten Spindelrotor (101.R) ausgeführt ist, welche mittels Wälzlagern (102) gelagert sind, wobei die Wälzlager (102) durch Zuführung von Schutzgas vor einem Kontakt mit dem Kältemittel geschützt sind.

11. Thermische Arbeitsmaschine nach Anspruch 10,
**dadurch gekennzeichnet, dass**
der Verdichter ($C_{KL}$) einen neutralen Raum (108) aufweist, aus dem zugeführtes Schutzgas abgeführt wird, wobei dem neutralen Raum (108) verdampftes Kältemittel zugeführt wird, so dass aus dem neutralen Raum (108) ein Gemisch aus Schutzgas und verdampftem Kältemittel abgeführt wird.

12. Thermische Arbeitsmaschine nach Anspruch 11,
**dadurch gekennzeichnet, dass**
der Verdichter ($C_{KL}$) einen Sperrdampfraum (117) aufweist, dem Kältemittel zugeführt und dort verdampft wird und welcher mit dem neutralen Raum (108) verbunden ist.

**13.** Thermische Arbeitsmaschine nach Anspruch 11 oder 12,
**dadurch gekennzeichnet, dass**
dem neutralen Raum (108) Schutzgas über einen seitenraumseitigen Strömungswiderstand (118.b) und/oder verdampftes Kältemittel über einen arbeitsraumseitigen Strömungswiderstand (118.a) zugeführt wird.

**14.** Thermische Arbeitsmaschine nach Anspruch 11, 12 oder 13,
**gekennzeichnet durch**
eine Recycling-Einrichtung (RC), der das aus dem neutralen Raum (108) abgeführte Gemisch aus Schutzgas und verdampftem Kältemittel zugeführt wird und welche das genannte Gemisch in Schutzgas und Kältemittel auftrennt.

**15.** Thermische Arbeitsmaschine nach Anspruch 14,
**dadurch gekennzeichnet, dass**
das in der Recycling-Einrichtung (RC) anfallendes Kältemittel wieder dem Kältemittelkreislauf (153) zugeführt wird.

**Claims**

1. A thermal working machine having an evaporator (A), a condenser (B), a compressor (C), a throttle element (D), and a refrigerant circuit (152, 153) with a water-based refrigerant having a refrigerant component with a hydroxyl group **characterized by** a refrigerant adjusting device (%A), by means of which the refrigerant component with the hydroxyl group can be changed during the operation of the thermal working machine (150, 151).

2. A thermal working machine according to claim 1,
**characterized in that**
said refrigerant component consists of an alcohol, in particular a monohydric alcohol, especially ethanol or propan-1-ol.

3. A thermal working according to claim 1 or 2,
**characterized in that**
said refrigerant content comprises at least 10%, in particular at least 20%, and especially at least 30%, of the total amount of refrigerant.

4. A thermal working according to claim 1, 2, or 3,
**characterized in that**
the proportion of the aforementioned refrigerant component having a hydroxyl group with respect to the total refrigerant is at most so high that the refrigerant is non-flammable.

5. A thermal working machine according to one of the claims 1 to 4,
**characterized in that**
all the electrical components of the thermal working machine are designed to be explosion-proof.

6. A thermal working machine according to one of the claims 1 to 5,
**characterized in that**
the compressor ($C_{GL}$) is designed as a 2-shaft rotary displacement machine having a first spindle rotor (3) that can be rotated about a first support shaft (5) and a second spindle rotor (3) that can be rotated about a second support shaft (5) and which are mounted by means of sliding bearings (6, 7) operated with the refrigerant.

7. A thermal working machine according to claim 6,
**characterized in that**
the first spindle rotor (5) is driven by a first drive machine (4), the second spindle rotor (5) is driven by a second drive machine (4), and the said refrigerant is used to cool at least one of the drive machines (4).

8. A thermal working machine according to claim 6 or 7,
**characterized in that**
the compressor ($C_{GL}$) has at least one pitot tube pump (9) by means of which refrigerant fed to the compressor ($C_{GL}$) is evacuated.

9. A thermal working machine according to claim 8,
**characterized in that**
the pitot tube pump (9) is fed via a collection channel (9.s) which extends around the corresponding support shaft (5) and is designed and arranged in such a manner that refrigerant located in the compressor ($C_{GL}$) collects in the collection channel (9.s) during operation of the compressor ($C_{GL}$).

10. A thermal working machine according to one of the claims 1 to 5,
**characterized in that**
the compressor ($C_{GL}$) is designed as a 2-shaft rotary displacement machine having a first spindle rotor (101.R) that can be rotated about a first support shaft (101) and a second spindle rotor (101.R) that can be rotated about a second support shaft (101) and which are mounted by means of rolling bearings (102) whereby the rolling bearings (102) are protected from contact with the refrigerant by feeding a supply of protective gas.

11. A thermal working machine according to claim 10,
**characterized in that**
the compressor ($C_{KL}$) has a neutral chamber (108) from which the protective gas supplied is discharged, whereby evaporated refrigerant is fed to the neutral chamber (108) so that a mixture of protective gas and evaporated refrigerant is evacuated from the neutral chamber (108).

**12.** A thermal working machine according to claim 11, **characterized in that** the compressor ($C_{KL}$) has a blocking steam chamber (117), to which refrigerant is fed and which evaporates there, which is connected to the neutral chamber (108).

**13.** A thermal working machine according to claim 11 or 12, **characterized in that** protective gas is fed to the neutral chamber (108) via a flow resistance on the side of the side space (118.b) and/or evaporated refrigerant is fed to the neutral chamber (108) via a flow resistance (118.a) on the side of the working chamber.

**14.** A thermal working machine according to claim 11, 12, or 13, **characterized in that** a recycling device (RC), to which the mixture of protective gas and evaporated refrigerant discharged from the neutral chamber (108) is fed and which separates said mixture into protective gas and refrigerant.

**15.** A thermal working machine according to claim 14, **characterized in that** the refrigerant accumulating in the recycling device (RC) is fed back to the refrigerant circuit (153).

**Revendications**

**1.** Machine-outil thermique avec un évaporateur (A), un condenseur (B), un compresseur (C), un organe d'étranglement (D) et un circuit de fluide frigorigène (152, 153) avec un fluide frigorigène à base d'eau, qui a une part de fluide frigorigène avec un hydroxyle, **caractérisée par** un dispositif de réglage du fluide frigorigène (%A), au moyen duquel la part de fluide frigorigène avec l'hydroxyle du fluide frigorigène peut être modifiée pendant le fonctionnement de la machine-outil thermique (150, 151).

**2.** Machine-outil thermique selon la revendication 1, **caractérisée en ce que** la part de fluide frigorigène mentionnée du fluide frigorigène se compose d'un alcool, notamment d'un monoalcool, spécialement de l'éthanol ou du propan-1-ol.

**3.** Machine-outil thermique selon la revendication 1 ou 2, **caractérisée en ce que** la part de fluide frigorigène mentionnée est d'au moins 10 %, en particulier d'au moins 20 %, spécialement d'au moins 30 % de l'ensemble du fluide frigorigène.

**4.** Machine-outil thermique selon la revendication 1, 2 ou 3, **caractérisée en ce que** la part de fluide frigorigène mentionnée avec un hydroxyle dans l'ensemble du fluide frigorigène est au plus si élevée que le fluide frigorigène n'est pas inflammable en cas de conditions de fonctionnement de la machine-outil thermique.

**5.** Machine-outil thermique selon l'une des revendications 1 à 4, **caractérisée en ce que** tous les composants électriques de la machine-outil thermique sont antidéflagrants.

**6.** Machine-outil thermique selon l'une des revendications 1 à 5, **caractérisée en ce que** le compresseur ($C_{GL}$) est conçu comme une machine volumétrique rotative à 2 arbres avec un premier rotor à broche (3) qui peut tourner autour d'un premier arbre porteur (5) et un deuxième rotor à broche (3) qui peut tourner autour d'un deuxième arbre porteur (5), lesquels sont disposés au moyen de paliers lisses (6, 7) actionnés par le fluide frigorigène.

**7.** Machine-outil thermique selon la revendication 6, **caractérisée en ce que**

le premier rotor à broche (5) est entraîné par une première machine de commande (4) et le deuxième rotor à broche (5) est entraîné par une deuxième machine de commande (4), et le fluide frigorigène mentionné est utilisé pour refroidir au moins une des machines de commande (4).

**8.** Machine-outil thermique selon la revendication 6 ou 7, **caractérisée en ce que** le compresseur ($C_{GL}$) comporte au moins une pompe à tube de Pitot (9), au moyen de laquelle le fluide frigorigène envoyé au compresseur ($C_{GL}$) est évacué.

**9.** Machine-outil thermique selon la revendication 8, **caractérisée en ce que** la pompe à tube de Pitot (9) est alimentée par un conduit avec retenue (9.s) s'étendant autour de l'arbre porteur correspondant (5), lequel est conçu et agencé de telle manière que le flux frigorigène se trouvant dans le compresseur ($C_{GL}$) s'accumule dans le conduit avec retenue (9.s), lorsque le compresseur ($C_{GL}$) fonctionne.

**10.** Machine-outil thermique selon l'une des revendications 1 à 5,
**caractérisée en ce que**
le compresseur ($C_{KL}$) est conçu comme une machine volumétrique rotative à 2 arbres avec un premier rotor à broche (101.R) qui peut tourner autour d'un premier arbre porteur (101) et un deuxième rotor à broche (101.R) qui peut tourner autour d'un deuxième arbre porteur (101), qui sont disposés au moyen de paliers à roulement (102), les paliers à roulement (102) étant protégé par le passage d'un gaz protecteur avant d'entrer en contact avec le fluide frigorigène.

11. Machine-outil thermique selon la revendication 10,
**caractérisée en ce que**
le compresseur ($C_{KL}$) comporte un espace neutre (108), à partir duquel le gaz protecteur fourni est évacué, le fluide frigorigène vaporisé étant fourni à l'espace neutre (108), de sorte qu'un mélange de gaz protecteur et de fluide frigorigène vaporisé est évacué de l'espace neutre (108 ).

12. Machine-outil thermique selon la revendication 11,
**caractérisée en ce que**
le compresseur ($C_{KL}$) comporte un espace de vapeur de barrage (117), vers lequel le fluide frigorigène est amené et d'où il s'évapore et qui est relié à l'espace neutre (108).

13. Machine-outil thermique selon la revendication 11 ou 12,
**caractérisée en ce que**
du gaz protecteur est amené à l'espace neutre (108) par une résistance à l'écoulement (118.b) côté espace latéral et/ou du fluide frigorigène évaporé est amené par une résistance à l'écoulement (118.a) côté espace de travail.

14. Machine-outil thermique selon la revendication 11, 12 ou 13,
**caractérisée par**
un dispositif de recyclage (DR), vers lequel est amené le mélange de gaz protecteur et fluide frigorigène évaporé, évacué de l'espace neutre (108), et qui sépare ledit mélange en gaz protecteur et fluide frigorigène.

15. Machine-outil thermique selon la revendication 14,
**caractérisée en ce que**
le fluide frigorigène produit dans le dispositif de recyclage (DR) est réacheminé vers le circuit de fluide frigorigène (153).

Fig. 1

EP 3 948 105 B1

Fig. 2

Fig. 3

**Fig. 4**

EP 3 948 105 B1

**Fig. 5**

EP 3 948 105 B1

KM

113
110
$p_A$
112
115
$L_{KM}$
104
101
101.R
116
117
110

$KM_z^o$

$P_N$

$p_s$

108

104

$PG_i$

$p_s$

109

102

102

106

104

105

105

$p_s$

103

$p_s$

107

S

107

104

111

PG*

**Fig. 6**

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004001927 A1
- WO 2006087549 A2
- US 20150260435 A1
- DE 102018001519